(19) Europäisches Patentamt
European Patent Office
Office européen des brevets

(11) **EP 4 194 076 A1**

(12) **EUROPEAN PATENT APPLICATION**
published in accordance with Art. 153(4) EPC

(43) Date of publication:
**14.06.2023 Bulletin 2023/24**

(21) Application number: **21852681.2**

(22) Date of filing: **21.07.2021**

(51) International Patent Classification (IPC):
**B01D 53/22** (2006.01)    **B01D 69/00** (2006.01)
**B01D 71/52** (2006.01)    **B01D 71/56** (2006.01)

(52) Cooperative Patent Classification (CPC):
**B01D 53/22; B01D 69/00; B01D 71/52; B01D 71/56;** Y02C 20/40

(86) International application number:
**PCT/JP2021/027422**

(87) International publication number:
**WO 2022/030267 (10.02.2022 Gazette 2022/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.08.2020 JP 2020134645**

(71) Applicant: **NITTO DENKO CORPORATION**
**Ibaraki-shi**
**Osaka 567-8680 (JP)**

(72) Inventors:
• **IHARA Terukazu**
**Ibaraki-shi, Osaka 567-8680 (JP)**
• **NISHIYAMA Shinya**
**Ibaraki-shi, Osaka 567-8680 (JP)**
• **TANI Kensuke**
**Ibaraki-shi, Osaka 567-8680 (JP)**
• **FUKUMURA Takuya**
**Ibaraki-shi, Osaka 567-8680 (JP)**
• **KATAGIRI Makoto**
**Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **GAS SEPARATION SYSTEM AND METHOD FOR SEPARATING MIXED GAS**

(57)    The present invention provides a gas separation system suitable for reducing energy required to separate a gas mixture. A gas separation system 100 of the present invention includes: a first separation membrane unit 10 that separates a gas mixture 70 containing carbon dioxide and nitrogen into a first permeated gas 80 and a first non-permeated gas 81; a second separation membrane unit 20 that separates the first permeated gas 80 into a second permeated gas 90 and a second non-permeated gas 91; a first decompression device 50 that decompresses a permeation-side space of the first separation membrane unit 10; and a second decompression device 52 that decompresses a permeation-side space of the second separation membrane unit 20.

FIG.1

**Description**

TECHNICAL FIELD

The present invention relates to a gas separation system and a method for separating a gas mixture.

BACKGROUND ART

In buildings such as factories and power plants, energy obtained by burning a fuel is used, for example. Usually, burning a fuel generates an emission gas containing carbon dioxide and nitrogen. From the viewpoint of environmental regulations, etc., it is desirable to remove the carbon dioxide from the emission gas.

A membrane separation method has been developed as a method for separating carbon dioxide from a gas mixture containing the carbon dioxide. The membrane separation method allows an efficient separation of carbon dioxide with a suppressed operation cost, compared with an absorption method according to which the carbon dioxide contained in a gas mixture is absorbed by an absorbent to be separated.

In the membrane separation method, a gas separation system created by combining a plurality of separation membrane units is used to separate a gas mixture with high precision. For example, Patent Literature 1 discloses an apparatus provided with a supply stream separation stage in which a supply stream is separated and a permeated substance separation stage in which a first permeation stream obtained in the supply stream separation stage is further separated by the membrane separation method. Patent Literature 2 discloses a gas separation system including a first gas separation membrane unit that separates a gas mixture and a second gas separation membrane unit that separates an unpermeated gas discharged from the first gas separation membrane unit.

CITATION LIST

Patent Literature

Patent Literature 1: JP 2018-511472 A
Patent Literature 2: JP 2013-128868 A

SUMMARY OF INVENTION

Technical Problem

Conventional gas separation systems tend to consume a lot of energy when separating a gas mixture, especially an emission gas containing carbon dioxide and nitrogen.

Therefore, the present invention is intended to provide a gas separation system suitable for reducing energy required to separate a gas mixture.

Solution to Problem

As a result of intensive studies, the present inventors have newly found that when a pressure of a gas mixture to be supplied to a gas separation system is increased significantly, the energy required to separate the gas mixture is increased significantly. The present inventors made further studies on the basis of this finding and have completed the present invention.

The present invention provides a gas separation system including:

a first separation membrane unit that separates a gas mixture containing carbon dioxide and nitrogen into a first permeated gas and a first non-permeated gas;
a second separation membrane unit that separates the first permeated gas into a second permeated gas and a second non-permeated gas;
a first decompression device that decompresses a permeation-side space of the first separation membrane unit; and
a second decompression device that decompresses a permeation-side space of the second separation membrane unit.

The present invention further provides a method for separating a gas mixture, including:

a first separation step of supplying a gas mixture containing carbon dioxide and nitrogen to a first separation membrane unit and separating the gas mixture into a first permeated gas and a first non-permeated gas by decompressing a permeation-side space of the first separation membrane unit; and

a second separation step of supplying the first permeated gas to a second separation membrane unit and separating the first permeated gas into a second permeated gas and a second non-permeated gas by decompressing a permeation-side space of the second separation membrane unit.

Advantageous Effects of Invention

The present invention can provide a gas separation system suitable for reducing energy required to separate a gas mixture.

BRIEF DESCRIPTION OF DRAWINGS

FIG. 1 is a configuration diagram of a gas separation system according to one embodiment of the present invention.
FIG. 2 is a schematic cross-sectional view showing an example of a first separation membrane unit.
FIG. 3 is a cross-sectional view showing an example of a first separation membrane.
FIG. 4 is a schematic cross-sectional view showing an example of a second separation membrane unit.
FIG. 5 is a graph for explaining relational expression (A).
FIG. 6 is a schematic cross-sectional view showing another example of the first separation membrane unit.
FIG. 7 is a configuration diagram showing another example of the gas separation system.
FIG. 8 is a configuration diagram showing still another example of the gas separation system.
FIG. 9 is a schematic cross-sectional view showing an example of a third separation membrane unit.
FIG. 10 is a configuration diagram of a conventional gas separation system.
FIG. 11 is a configuration diagram of a conventional gas separation system.

DESCRIPTION OF EMBODIMENTS

The present invention will be described in detail below. The following description is not intended to limit the present invention to a specific embodiment.

<Gas Separation System>

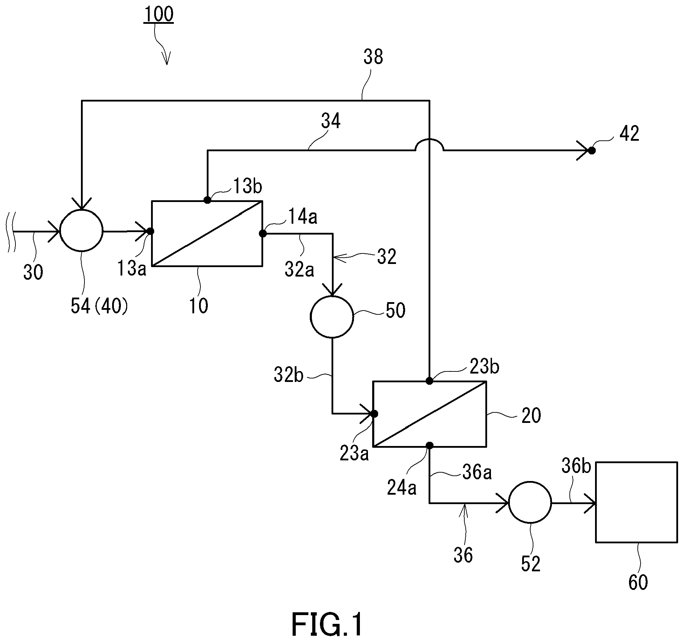

As shown in FIG. 1, a gas separation system 100 of the present embodiment includes a first separation membrane unit 10, a second separation membrane unit 20, a first decompression device 50, and a second decompression device 52. The first separation membrane unit 10 is a membrane separation device that separates, using a first separation membrane, a gas mixture containing carbon dioxide and nitrogen. The first separation membrane that the first separation membrane unit 10 has can separate the gas mixture into a first permeated gas and a first non-permeated gas. The second separation membrane unit 20 is a membrane separation device that separates, using a second separation membrane, the first permeated gas discharged from the first separation membrane unit 10. The second separation membrane that the second separation membrane unit 20 has can separate the first permeated gas into a second permeated gas and a second non-permeated gas.

The gas mixture contains a main component gas and a sub-component gas, for example. The main component gas refers to a gas whose content is highest in the gas mixture on weight basis. The sub-component gas refers to one of gases contained in the gas mixture, other than the main component gas. The gas mixture contains, for example, nitrogen as the main component gas and carbon dioxide as the sub-component gas. Examples of the gas mixture include an emission gas generated by burning a fuel (a fossil fuel) such as a natural gas (a town gas) and a propane gas. The gas mixture is not limited to the emission gas and it may be air.

The first separation membrane of the first separation membrane unit 10 allows, for example, the sub-component gas contained in the gas mixture, specifically at least one gas contained in the sub-component gas, to preferentially permeate therethrough. Therefore, the first permeated gas separated by the first separation membrane has a content of the sub-component gas higher than that in the gas mixture and a content of the main component gas lower than that in the gas mixture. In contrast, the first non-permeated gas has a content of the sub-component gas lower than that in the gas mixture and a content of the main component gas higher than that in the gas mixture. For ease of explanation, the "main component gas" and the "sub-component gas" in the first permeated gas are so named in the present description based on their contents in the gas mixture before separation. For example, even when in the first permeated gas, the content of the sub-component gas (carbon dioxide, for example) that is the sub-component gas in the gas mixture is higher than the content of the main component gas (nitrogen, for example) that is the main component gas in the gas mixture, the sub-component gas in the gas mixture is referred to as the "sub-component gas" in the first permeated gas and the main component gas in the gas mixture is referred to as the "main component gas" in the first permeated gas.

The second separation membrane of the second separation membrane unit 20 allows, for example, the sub-component gas contained in the first permeated gas, specifically at least one gas contained in the sub-component gas, to preferentially permeate therethrough. Therefore, the second permeated gas separated by the second separation membrane has a content of the sub-component gas higher than that in the first permeated gas and a content of the main component gas lower than that in the first permeated gas. In contrast, the second non-permeated gas has a content of the sub-component gas lower than that in the first permeated gas and a content of the main component gas higher than that in the first permeated gas. In the present description, the "main component gas" and the "sub-component gas" in the second permeated gas and the second non-permeated gas are so named in the same manner as in the case of the first permeated gas based on their contents in the gas mixture before separation by the first separation membrane.

The first decompression device 50 can decompress a permeation-side space of the first separation membrane unit 10. In other words, the first decompression device 50 can cause or increase a pressure difference between a supply-side space and the permeation-side space of the first separation membrane unit 10. A specific example of the first decompression device 50 is a pump. Preferably, the first decompression device 50 is a vacuum device such as a vacuum pump. The vacuum pump is typically a gas transport vacuum pump, and a reciprocating vacuum pump and a rotary vacuum pump, etc. can be mentioned. Examples of the reciprocating vacuum pump include a diaphragm vacuum pump and a rocking piston vacuum pump. Examples of the rotary vacuum pump include: a liquid seal pump; an oil rotary pump (a rotary pump); a mechanical booster pump; and various kinds of dry pumps such as a roots dry pump, a claw dry pump, a screw dry pump, a turbo dry pump, and a scroll dry pump. The pump as the first decompression device 50 may include a variable speed mechanism for changing a rotational speed, etc. An example of the variable speed mechanism is an inverter that drives a motor of the pump. By controlling the rotational speed, etc. of the pump by the variable speed mechanism, it is possible to adjust properly a pressure in the permeation-side space of the first separation membrane unit 10.

The first decompression device 50 may be an assembly of a plurality of pumps. That is, the first decompression device 50 may have a configuration that allows each of the pumps to decompress the permeation-side space of the first separation membrane unit 10. This configuration makes it possible to adjust properly the pressure in the permeation-side space of the first separation membrane unit 10 by adjusting the number of the pumps to run.

The second decompression device 52 can decompress a permeation-side space of the second separation membrane unit 20. In other words, the second decompression device 52 can cause or increase a pressure difference between a supply-side space and the permeation-side space of the second separation membrane unit 20. A specific example of the second decompression device 52 is a pump. Preferably, the second decompression device 52 is a vacuum device such as a vacuum pump. As the vacuum pump, those mentioned above for the first decompression device 50 can be used. The pump as the second decompression device 52 may include a variable speed mechanism for changing a rotational speed, etc. An example of the variable speed mechanism is an inverter that drives a motor of the pump. By controlling the rotational speed, etc. of the pump by the variable speed mechanism, it is possible to adjust properly a pressure in the permeation-side space of the second separation membrane unit 20.

The second decompression device 52 may be an assembly of a plurality of pumps. That is, the second decompression device 52 may have a configuration that allows each of the pumps to decompress the permeation-side space of the second separation membrane unit 20. This configuration makes it possible to adjust properly the pressure in the permeation-side space of the second separation membrane unit 20 by adjusting the number of the pumps to run.

The gas separation system 100 further includes a gas mixture supply passage 30. The gas mixture supply passage 30 is a passage connected to a gas mixture inlet (an inlet 13a) of the first separation membrane unit 10 and configured to supply the gas mixture to the first separation membrane unit 10 from, for example, a tank (not shown) storing the gas mixture. The gas mixture supply passage 30 may be connected directly to a source of the gas mixture and may be configured to supply continuously the gas mixture to the first separation membrane unit 10 from the source. The gas mixture supply passage 30 may or may not be provided with a pressurizing device 54 that pressurizes the supply-side space of the first separation membrane unit 10. Examples of the pressurizing device 54 include a compressor, a blower, and a back pressure valve. The pressurizing device 54 can pressurize the supply-side space of the first separation membrane unit 10 by, for example, increasing a pressure of the gas mixture to be supplied to the first separation membrane unit 10.

The gas mixture supply passage 30 may be provided with a gas sensor for measuring a composition of the gas mixture. The gas sensor can detect, for example, a content of carbon dioxide in the gas mixture. Preferably, the gas sensor is disposed near the inlet 13a of the first separation membrane unit 10. By measuring the composition of the gas mixture to be supplied to the first separation membrane unit 10 by using the gas sensor, it is possible to properly set operating conditions of the first separation membrane unit 10, especially a decompression degree of the permeation-side space of the first separation membrane unit 10.

The gas separation system 100 further includes a permeated gas supply passage 32. The permeated gas supply passage 32 is a passage connected to a permeated gas outlet (an outlet 14a) of the first separation membrane unit 10 and a permeated gas inlet (an inlet 23a) of the second separation membrane unit 20 and configured to supply the first permeated gas from the first separation membrane unit 10 to the second separation membrane unit 20. The permeated gas supply passage 32 is provided with the first decompression device 50.

The permeated gas supply passage 32 has a first portion 32a extending from the first separation membrane unit 10 to the first decompression device 50 and a second portion 32b extending from the first decompression device 50 to the second separation membrane unit 20. The first decompression device 50 can decompress the permeation-side space of the first separation membrane unit 10 via the first portion 32a. The first decompression device 50 draws the first permeated gas having passed through the first portion 32a and discharges the first permeated gas to the second portion 32b, for example. The first decompression device 50 is configured in such a manner as not to discharge the gas having passed through the first portion 32a to an outside of the gas separation system 100, for example. The first decompression device 50 is connected only to the first portion 32a and the second portion 32b, for example. In the case where the first decompression device 50 is an assembly of a plurality of pumps, the first portion 32a of the permeated gas supply passage 32 may be branched and connected to an inlet of each of the pumps. Similarly, the second portion 32b of the permeated gas supply passage 32 may be branched and connected to an outlet of each of the pumps.

The second portion 32b may or may not be provided with a pressurizing device (not shown) that increases a pressure of the first permeated gas discharged from the first decompression device 50. This pressurizing device makes it possible to pressurize the supply-side space of the second separation membrane unit 20. Examples of the pressurizing device include a compressor, a blower, and a back pressure valve. The second portion 32b may be provided with a gas sensor for measuring a composition of the first permeated gas. This gas sensor can detect, for example, a content of carbon dioxide in the first permeated gas. Preferably, the gas sensor is disposed near the inlet 23a of the second separation membrane unit 20. By measuring the composition of the first permeated gas to be supplied to the second separation membrane unit 20 by using the gas sensor, it is possible to properly set operating conditions of the second separation membrane unit 20, especially a decompression degree of the permeation-side space of the second separation membrane unit 20.

Preferably, the permeated gas supply passage 32 is provided with no tanks, such as a collector that collects the first permeated gas, or an opening and closing valve that opens and closes the passage. Especially, in the case where the permeated gas supply passage 32 is provided with no collector, it is possible to supply continuously the first permeated gas discharged from the first separation membrane unit 10 to the second separation membrane unit 20. Such a configuration makes it possible to easily increase an amount of the gas mixture to be processed per unit time. In one example, the permeated gas supply passage 32 may be composed only of the first decompression device 50 and a pipe.

The gas separation system 100 further includes a first discharge passage 34. The first discharge passage 34 is a passage connected to a non-permeated gas outlet (an outlet 13b) of the first separation membrane unit 10 and configured to discharge the first non-permeated gas from the first separation membrane unit 10. In the first discharge passage 34, an opening (a discharge outlet 42) for discharging the first non-permeated gas from the first discharge passage 34 is formed. The gas separation system 100 may further include a tank (not shown) that stores the first non-permeated gas, and the first discharge passage 34 may be connected to the tank.

The gas separation system 100 further includes a second discharge passage 36 and a tank 60. The second discharge passage 36 is a passage connected to a permeated gas outlet (an outlet 24a) of the second separation membrane unit 20 and an inlet of the tank 60 and configured to deliver the second permeated gas from the second separation membrane unit 20 to the tank 60. The tank 60 can store the second permeated gas delivered from the second separation membrane unit 20. The second discharge passage 36 is provided with the second decompression device 52.

The second discharge passage 36 has a first portion 36a extending from the second separation membrane unit 20 to the second decompression device 52 and a second portion 36b extending from the second decompression device 52 to the tank 60. The second decompression device 52 can decompress the permeation-side space of the second separation membrane unit 20 via the first portion 36a. The second decompression device 52 draws the second permeated gas having passed through the first portion 36a and discharges the second permeated gas to the second portion 36b, for example. The second decompression device 52 is configured in such a manner as not to discharge the gas having passed through the first portion 36a to the outside of the gas separation system 100, for example. The second decompression device 52 is connected only to the first portion 36a and the second portion 36b, for example. In the case where the second decompression device 52 is an assembly of a plurality of pumps, the first portion 36a of the second discharge passage 36 may be branched and connected to an inlet of each of the pumps. Similarly, the second portion 36b of the second discharge passage 36 may be branched and connected to an outlet of each of the pumps.

The gas separation system 100 further includes a third discharge passage 38. The third discharge passage 38 is a passage connected to a non-permeated gas outlet (an outlet 23b) of the second separation membrane unit 20 and configured to discharge the second non-permeated gas from the second separation membrane unit 20. The third discharge passage 38 may join, for example, the gas mixture supply passage 30 at a joining point 40. In FIG. 1, the third discharge passage 38 is connected to the pressurizing device 54 and joins the gas mixture supply passage 30 at the pressurizing device 54. When the third discharge passage 38 joins the gas mixture supply passage 30, it is possible, for example, to recycle the second non-permeated gas containing the sub-component gas that the second separation membrane unit 20 has failed to separate.

Each passage of the gas separation system 100 is composed of, for example, a metal or resin pipe unless otherwise noted.

The gas separation system 100 may further include a controller (not shown) that controls each member of the gas separation system 100. The controller is, for example, a DSP (Digital Signal Processor) including an A/D conversion circuit, an input/output circuit, an arithmetic circuit, a storage device, etc. A program for operating properly the gas separation system 100 is stored in the controller. Specifically, the controller can control behaviors of the first decompression device 50 and the second decompression device 52. The controller may receive information from the gas sensors and determine operating conditions of the decompression devices 50 and 52 based on the information.

In one example, when the gas mixture is supplied from the gas mixture supply passage 30 to the first separation membrane unit 10, the controller controls the first decompression device 50 so as to decompress the permeation-side space of the first separation membrane unit 10. Specifically, while the gas mixture is being supplied to the first separation membrane unit 10, the controller controls the first decompression device 50 so as to continue decompressing the permeation-side space of the first separation membrane unit 10. Similarly, when the first permeated gas is supplied from the permeated gas supply passage 32 to the second separation membrane unit 20, the controller controls the second decompression device 52 so as to decompress the permeation-side space of the second separation membrane unit 20. Specifically, while the first permeated gas is being supplied to the second separation membrane unit 20, the controller controls the second decompression device 52 so as to continue decompressing the permeation-side space of the second separation membrane unit 20. It should be noted that the gas separation system 100 may not include the controller. In the gas separation system 100, an operator may switch on and off the decompression devices 50 and 52 to control the behaviors of the decompression devices 50 and 52.

The gas separation system 100 of the present embodiment is a continuous-type system, for example. In the present description, the continuous-type system means a system that can process the gas mixture continuously without closing, by using an opening and closing valve, etc., the passages included in the gas separation system 100. In other words, the gas separation system 100 can process the gas mixture in the first separation membrane unit 10 as well as process immediately, in the second separation membrane unit 20, the first permeated gas obtained in the first separation membrane unit 10 without collecting the first permeated gas into a tank, etc. As just described above, the gas separation system 100 of the present embodiment can be operated continuously. The gas separation system 100 that functions as a continuous-type system is suitable for applications in which a gas mixture is supplied continuously, especially for processing of an emission gas.

In the gas separation system 100, at least one of the following holds, for example: (I) the gas mixture is separated into the first permeated gas and the first non-permeated gas while the permeation-side space of the first separation membrane unit 10 is being decompressed by the first decompression device 50; and (II) the first permeated gas is separated into the second permeated gas and the second non-permeated gas while the permeation-side space of the second separation membrane unit 20 is being decompressed by the second decompression device 52. In the gas separation system 100, it is preferable that both of the requirements (I) and (II) above hold.

[First Separation Membrane Unit]

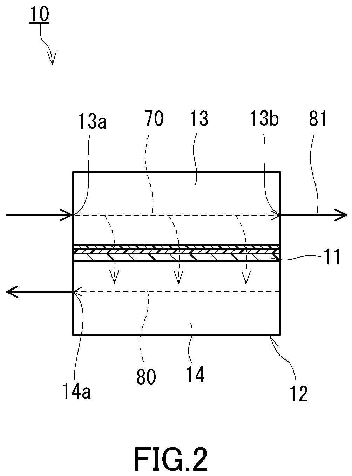

As shown in FIG. 2, the first separation membrane unit 10 includes a first separation membrane 11 and a tank 12. The tank 12 has a first chamber 13 and a second chamber 14. A space in the first chamber 13 corresponds to the supply-side space and a space in the second chamber 14 corresponds to the permeation-side space. The first separation membrane 11 is disposed in the tank 12. In the tank 12, the first separation membrane 11 separates the first chamber 13 and the second chamber 14 from each other. The first separation membrane 11 extends from one of a pair of wall surfaces of the tank 12 to the other.

The first chamber 13 has the inlet 13a and the outlet 13b. The second chamber 14 has the outlet 14a. The inlet 13a of the first chamber 13 is an opening for supplying a gas mixture 70 to the first separation membrane unit 10. The outlet 14a of the second chamber 14 is an opening for discharging, from the first separation membrane unit 10, a first permeated gas 80 obtained by allowing the gas mixture 70 to permeate through the first separation membrane 11. The outlet 13b of the first chamber 13 is an opening for discharging, from the first separation membrane unit 10, the gas mixture 70 (a first non-permeated gas 81) not having permeated through the first separation membrane 11. The inlet 13a, the outlet 13b, and the outlet 14a are formed, for example, in wall surfaces of the tank 12.

(First Separation Membrane)

The first separation membrane 11 allows, for example, the sub-component gas contained in the gas mixture 70 to preferentially permeate therethrough. Hereinafter, the first separation membrane 11 that allows an acid gas, especially carbon dioxide, contained in the gas mixture 70 to preferentially permeate therethrough will be described as one example.

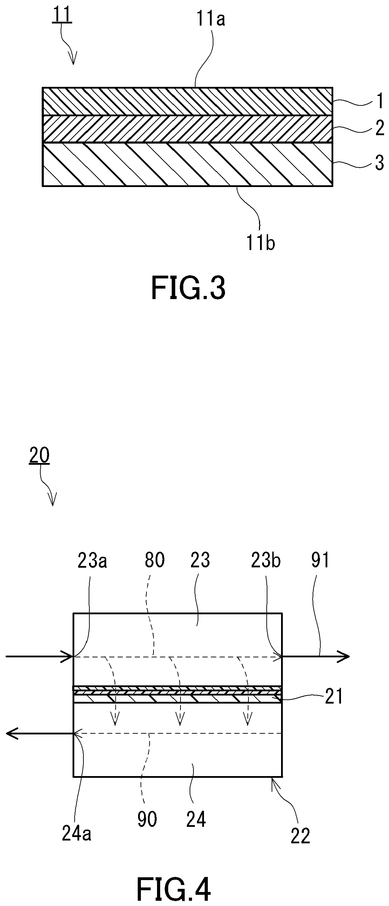

As shown in FIG. 3, the first separation membrane 11 includes, for example, a separation functional layer 1. The first separation membrane 11 may further include a porous support member 3 supporting the separation functional layer 1 and an intermediate layer 2 disposed between the separation functional layer 1 and the porous support member 3. The intermediate layer 2 is, for example, in direct contact with each of the separation functional layer 1 and the porous support member 3.

A membrane area of the first separation membrane 11 can be set as appropriate in accordance with conditions for separating the gas mixture 70.

(Separation Functional Layer)

The separation functional layer 1 is a layer allowing an acid gas contained in the gas mixture 70 to preferentially permeate therethrough. In a preferred embodiment, the separation functional layer 1 includes a resin. Examples of the resin included in the separation functional layer 1 include a polyether block amide resin, a polyamide resin, a polyether resin, a polyimide resin, a cellulose acetate resin, a silicone resin, and a fluorine resin. The separation functional layer 1 preferably includes a polyether block amide resin. In this embodiment, the separation functional layer 1 is preferably composed substantially of a resin. In the present description, the phrase "composed substantially of" means exclusion of other component that alters essential characteristics of a material referred to, and means, for example, that 95% or more or even 99% or more is composed of the material.

In another preferred embodiment, the separation functional layer 1 includes an ionic liquid. The separation functional layer 1 includes, for example, a double-network gel including an ionic liquid. The double-network gel is a gel including two types of network structures independent from each other. The double-network gel includes, for example, a first network structure composed mainly of an organic material, a second network structure composed mainly of an inorganic material, and an ionic liquid. In the present description, the phrase "composed mainly of" means that 50 wt% or more or even 70 wt% or more is composed of the material.

The organic material for constituting the first network structure includes, for example, a polymer such as polyacrylamide (particularly, polydialkylacrylamide such as polydimethylacrylamide). The polymer included in the organic material may have a structural unit derived from an acrylamide derivative and may further include a cross-linked structure. The polymer including a cross-linked structure can be produced by a known method. First, a prepolymer having a structural unit having an N-hydroxysuccinimide ester group is prepared, for example. The structural unit having an N-hydroxysuccinimide ester group derives from N-acryloxysuccinimide, for example. Next, the prepolymer is allowed to react with an amine cross linking agent to obtain a polymer including a cross-linked structure. The amine cross linking agent is a compound, such as ethylene glycol bis(3-aminopropyl) ether, having two or more primary amino groups.

The second network structure may include a network of a plurality of particles. The network of the plurality of particles are formed by, for example, the plurality of particles being bonded to each other by hydrogen bonds. The particles included in the second network structure may be particles exemplified as the nanoparticles described later. In an example, the particles included in the second network structure are silica particles.

In the present embodiment, specific examples of the ionic liquid include an ionic liquid having: imidazolium, pyridinium, ammonium, or phosphonium; and a substituent having 1 or more carbon atoms.

In an ionic liquid having imidazolium and a substituent having 1 or more carbon atoms, examples of the substituent having 1 or more carbon atoms include an alkyl group having 1 to 20 carbon atoms, a cycloalkyl group having 3 to 14 carbon atoms, and an aryl group having 6 to 20 carbon atoms, and these may be each further substituted by a hydroxy group, a cyano group, an amino group, a monovalent ether group, or the like (for example a hydroxyalkyl group having 1 to 20 carbon atoms).

Examples of the alkyl group having 1 to 20 carbon atoms include a methyl group, an ethyl group, an n-propyl group, an n-butyl group, an n-pentyl group, an n-hexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group, an n-eicosadecyl group, an i-propyl group, a sec-butyl group, an i-butyl group, a 1-methylbutyl group, a 1-ethylpropyl group, a 2-methylbutyl group, an i-pentyl group, a neopentyl group, a 1,2-dimethylpropyl group, a 1,1-dimethylpropyl group, a t-pentyl group, a 2-ethylhexyl group, and a 1,5-dimethylhexyl group. These may be each further substituted by a hydroxy group, a cyano group, an amino group, a monovalent ether group, or the like.

The above alkyl group may be substituted by a cycloalkyl group. The number of carbon atoms in the alkyl group substituted by the cycloalkyl group is, for example, 1 or more and 20 or less. Examples of the alkyl group substituted by the cycloalkyl group include a cyclopropyl methyl group, a cyclobutyl methyl group, a cyclohexyl methyl group, and a cyclohexyl propyl group. These may be each further substituted by a hydroxy group, a cyano group, an amino group, a monovalent ether group, or the like.

Examples of the cycloalkyl group having 3 to 14 carbon atoms include a cyclopropyl group, a cyclobutyl group, a cyclopentyl group, a cyclohexyl group, a cycloheptyl group, a cyclooctyl group, a cyclododecyl group, a norbornyl group, a bornyl group, and an adamantyl group. These may be each further substituted by a hydroxy group, a cyano group, an amino group, a monovalent ether group, or the like.

Examples of the aryl group having 6 to 20 carbon atoms include a phenyl group, a toluyl group, a xylyl group, a mesityl group, an anisyl group, a naphthyl group, and a benzyl group. These may be each further substituted by a hydroxy group, a cyano group, an amino group, a monovalent ether group, or the like.

A compound having imidazolium and a substituent having 1 or more carbon atoms may further have a substituent such as an alkyl group, and may form a salt with a counter anion. Examples of the counter anion include alkyl sulfate, tosylate, methanesulfonate, acetate, bis(fluorosulfonyl)imide, bis(trifluoromethanesulfonyl)imide, thiocyanate, dicyanamide, tricyanomethanide, tetracyanoborate, hexafluorophosphate, tetrafluoroborate, and halide. From the viewpoint of gas separation performance, preferred are bis(fluorosulfonyl)imide, bis(trifluoromethanesulfonyl)imide, dicyanamide, tricyanomethanide, and tetracyanoborate.

Specific examples of the ionic liquid having imidazolium and a substituent having 1 or more carbon atoms include 1-ethyl-3-methylimidazolium bis(fluorosulfonyl)imide, 1-ethyl-3-methylimidazolium dicyanamide, 1-butyl-3-methylimidazolium bromide, 1-butyl-3-methylimidazolium chloride, 1-butyl-3-methylimidazolium tetrafluoroborate, 1-butyl-3-methylimidazolium hexafluorophosphate, 1-butyl-3-methylimidazolium trifluoromethanesulfonate, 1-butyl-3-methylimidazolium tetrachloroferrate, 1-butyl-3-methylimidazolium iodide, 1-butyl-2,3-dimethylimidazolium chloride, 1-butyl-2,3-dimethylimidazolium hexafluorophosphate, 1-butyl-2,3-dimethylimidazolium tetrafluoroborate, 1-butyl-3-methylimidazolium bis(trifluoromethanesulfonyl)imide, 1-butyl-2,3-dimethylimidazolium bis(trifluoromethanesulfonyl)imide, 1-butyl-2,3-dimethylimidazolium bis(trifluoromethanesulfonyl)imide, 1-butyl-3-methylimidazolium trifluoro(trifluoromethyl)borate, 1-butyl-3-methylimidazolium tribromide, 1,3-dimesitylimidazolium chloride, 1,3-bis(2,6-diisopropylphenyl)imidazolium chloride, 1,3-diisopropylimidazolium tetrafluoroborate, 1,3-di-tert-butylimidazolium tetrafluoroborate, 1,3-dicyclohexylimidazolium tetrafluoroborate, 1,3-dicyclohexylimidazolium chloride, 1,2-dimethyl-3-propylimidazolium iodide, 1-hexyl-3-methylimidazolium chloride, 1-hexyl-3-methylimidazolium hexafluorophosphate, 1-hexyl-3-methylimidazolium tetrafluoroborate, 1-hexyl-3-methylimidazolium bromide, 1-methyl-3-propylimidazolium iodide, 1-methyl-3-n-octylimidazolium bromide, 1-methyl-3-n-octylimidazolium chloride, 1-methyl-3-n-octylimidazolium hexafluorophosphate, 1-methyl-3-[6-(methylsulfinyl)hexyl] imidazolium p-toluenesulfonate, 1-ethyl-3-methylimidazolium tricyanomethanide, 1-ethyl-3-methylimidazolium tetracyanoborate, and 1-(2-hydroxyethyl)-3-methylimidazolium bis(trifluoromethanesulfonyl)imide.

Among these, from the viewpoint of gas separation performance, particularly preferred are 1-ethyl-3-methylimidazolium bis(fluorosulfonyl)imide ([EMI][FSI]), 1-ethyl-3-methylimidazolium dicyanamide ([EMI][DCA]), 1-ethyl-3-methylimidazolium tricyanomethanide ([EMI][TCM]), 1-ethyl-3-methylimidazolium tetracyanoborate ([EMI][TCB]), 1-butyl-3-methylimidazolium bis(trifluoromethanesulfonyl)imide ([C$_4$mim][TF$_2$N]), and 1-(2-hydroxyethyl)-3-methylimidazolium bis(trifluoromethanesulfonyl)imide ([C$_2$OHim][TF$_2$N]).

The method for producing the double-network gel is not particularly limited, and the method disclosed in E. Kamio et al., Adv.Mater, 29, 1704118 (2017) can be used, for example.

A content of the ionic liquid in the double-network gel is, for example, 50 wt% or more, preferably 60 wt% or more, more preferably 70 wt% or more, and still more preferably 80 wt% or more. The higher the content of the ionic liquid is, the more preferentially the separation functional layer 1 allow the acid gas contained in the gas mixture to permeate therethrough. The upper limit of the content of the ionic liquid is not particularly limited and it is 95 wt%, for example.

A content of the first network structure, in the double-network gel, composed mainly of an organic material is, for example, 1 wt% or more, preferably 5 wt% or more, and more preferably 10 wt% or more. The upper limit of the content of the first network structure is 15 wt%, for example. A content of the second network structure, in the double-network gel, composed mainly of an inorganic material is, for example, 1 wt% or more from the viewpoint of improving the strength of the double-network gel. The upper limit of the content of the second network structure is 5 wt%, for example. A ratio of a total value of a weight of the first network structure and a weight of the second network structure with respect to a weight of the double-network gel is, for example, 2 wt% or more, preferably 5 wt% or more, and more preferably 10 wt% or more. This ratio is preferably 20 wt% or less. In this embodiment, the separation functional layer 1 is preferably composed substantially of the double-network gel.

A thickness of the separation functional layer 1 is, for example, 50 μm or less, preferably 25 μm or less, and more preferably 15 μm or less. In some cases, the thickness of the separation functional layer 1 may be 10 μm or less, 5.0 μm or less, or 2.0 μm or less. The thickness of the separation functional layer 1 may be 0.05 μm or more, or 0.1 μm or more.

(Intermediate Layer)

The intermediate layer 2 includes a resin, for example, and may further include nano particles dispersed in the resin (a matrix). The nano particles may be separated from each other or partially aggregate in the matrix. A material of the matrix is not particularly limited, and examples thereof include: a silicone resin such as polydimethylsiloxane; a fluorine resin such as polytetrafluoroethylene; an epoxy resin such as polyethylene oxide; a polyimide resin; a polysulfone resin; a polyacetylene resin such as polytrimethylsilylpropyne and polydiphenylacetylene; and a polyolefin resin such as polymethylpentene. Preferably, the matrix includes a silicone resin.

The nanoparticles may include an inorganic material or an organic material. The inorganic material included in the nanoparticles is, for example, silica, titania, or alumina. Preferably, the nanoparticles include silica.

A thickness of the intermediate layer 2 is not particularly limited and it is, for example, less than 50 $\mu$m, preferably 40 $\mu$m or less, and more preferably 30 $\mu$m or less. The lower limit of the thickness of the intermediate layer 2 is not particularly limited and it is 1 $\mu$m, for example. The intermediate layer 2 is, for example, a layer having a thickness of less than 50 $\mu$m.

(Porous Support Member)

The porous support member 3 supports the separation functional layer 1 via the intermediate layer 2. Examples of the porous support member 3 include: a nonwoven fabric; porous polytetrafluoroethylene; aromatic polyamide fiber; a porous metal; a sintered metal; porous ceramic; porous polyester; porous nylon; activated carbon fiber; latex; silicone; silicone rubber; a permeable (porous) polymer including at least one selected from the group consisting of polyvinyl fluoride, polyvinylidene fluoride, polyurethane, polypropylene, polyethylene, polystyrene, polycarbonate, polysulfone, polyether ether ketone, polyacrylonitrile, polyimide, and polyphenylene oxide; a metallic foam having an open cell or a closed cell; a polymer foam having an open cell or a closed cell; silica; a porous glass; and a mesh screen. The porous support member 3 may be a combination of two or more of these materials.

The porous support member 3 has an average pore diameter of 0.01 to 0.4 $\mu$m, for example. A thickness of the porous support member 3 is not particularly limited and it is, for example, 10 $\mu$m or more, preferably 20 $\mu$m or more, and more preferably 50 $\mu$m or more. The thickness of the porous support member 3 is, for example, 300 $\mu$m or less, preferably 200 $\mu$m or less, and more preferably 150 $\mu$m or less.

(Method for Producing First Separation Membrane)

The first separation membrane 11 can be produced by the following method, for example. First, a coating liquid containing a material of the intermediate layer 2 is prepared. Next, the coating liquid containing the material of the intermediate layer 2 is applied onto the porous support member 3 to form a coating. The method for applying the coating liquid is not particularly limited, and a wire bar, etc. can be used, for example. The thickness of the intermediate layer 2 to be formed can be adjusted by adjusting a wire diameter of the wire bar and a concentration of the material of the intermediate layer 2 in the coating liquid. The coating may be formed by immersing the porous support member 3 in the coating liquid. Next, the coating is dried to form the intermediate layer 2. The coating can be dried under heating conditions, for example. The heating temperature of the coating is 50°C or higher, for example. The heating time of the coating is 1 minute or more, for example, and it may be 5 minutes or more.

An easy-adhesion treatment can be applied onto a surface of the intermediate layer 2 as necessary. As the easy-adhesion treatment, a surface treatment such as application of an undercoat agent, a corona discharge treatment, and a plasma treatment may be applied.

Next, a coating liquid containing a material of the separation functional layer 1 is prepared. The coating liquid containing the material of the separation functional layer 1 is applied onto the intermediate layer 2 to obtain a coating. The coating is dried to form the separation functional layer 1. The method for applying the coating liquid and the drying conditions can be the same as the method and the conditions described above for the intermediate layer 2. The application of the coating liquid containing the material of the separation functional layer 1 may be performed by spin coating. Thus, the first separation membrane 11 can be obtained.

The method for producing the first separation membrane 11 is not limited to the above method. For example, the first separation membrane 11 can also be produced by the following method. For example, the coating liquid containing the material of the separation functional layer 1 is applied onto a transfer film to obtain a coating. The coating is dried to form the separation functional layer 1. Next, the coating liquid containing the material of the intermediate layer 2 is applied onto the separation functional layer 1 and dried to form the intermediate layer 2. A laminate of the intermediate layer 2 and the separation functional layer 1 is transferred to the porous support member 3. Thus, the first separation membrane 11 can be obtained.

(Characteristics of First Separation Membrane)

A permeation rate of the acid gas permeating through the first separation membrane 11 is not particularly limited. In an example, a permeation rate $T_1$ of the carbon dioxide permeating through the first separation membrane 11 is, for example, 50 GPU or more, preferably 100 GPU or more, more preferably 150 GPU or more, still more preferably 200 GPU or more, and particularly preferably 300 GPU or more. The upper limit of the permeation rate $T_1$ is not particularly limited and it is 500 GPU, for example. Here, GPU means $10^{-6} \cdot cm^3(STP)/(sec \cdot cm^2 \cdot cmHg)$, and $cm^3(STP)$ means the volume of carbon dioxide at 1 atm and 0°C.

The permeation rate $T_1$ can be calculated by the following method. First, a gas mixture composed of carbon dioxide and nitrogen is supplied to a space adjacent to one surface of the first separation membrane 11 (a main surface 11a, on the separation functional layer side, of the first separation membrane 11, for example). As a result, in a space adjacent to the other surface of the first separation membrane 11 (a main surface 11b, on the porous support member side, of the first separation membrane 11, for example), a permeated gas that has permeated through the first separation membrane 11 can be obtained. A composition of the permeated gas, a weight of the permeated gas, etc. are measured. From the measurement results, the permeation rate $T_1$ can be calculated. In the above-mentioned procedure, a concentration of the carbon dioxide in the gas mixture is 50 vol% under standard conditions (0°C, 101 kPa). The gas mixture supplied to the space adjacent to the one surface of the first separation membrane 11 has a temperature of 30°C and a pressure of 0.1 MPa.

The above method also makes it possible to calculate a permeation rate $T_2$ of the nitrogen permeating through the first separation membrane 11. The permeation rate $T_2$ is, for example, 25 GPU or less, preferably 15 GPU or less, and more preferably 15 GPU or less. The lower limit of the permeation rate $T_2$ is not particularly limited and it is 1 GPU, for example.

Under the measurement conditions for the permeation rate $T_1$ mentioned above, a separation factor $\alpha$ that the first separation membrane 11 has for carbon dioxide with respect to nitrogen is, for example, 15 or more, preferably 20 or more, more preferably 30 or more, still more preferably 40 or more, and particularly preferably 50 or more. The upper limit of the separation factor $\alpha$ is not particularly limited and it is 100, for example. The separation factor $\alpha$ can be calculated by the following formula. It should be noted that in the following formula, $X_A$ and $X_B$ are respectively a volume ratio of the carbon dioxide and a volume ratio of the nitrogen in the gas mixture. $Y_A$ and $Y_B$ are respectively a volume ratio of the carbon dioxide and a volume ratio of the nitrogen in the permeated gas that has permeated through the first separation membrane 11. Separation factor $\alpha = (Y_A/Y_B)/(X_A/X_B)$

[Second Separation Membrane unit]

As shown in FIG. 4, the second separation membrane unit 20 includes a second separation membrane 21 and a tank 22. The tank 22 has a third chamber 23 and a fourth chamber 24. A space in the third chamber 23 corresponds to the supply-side space and a space in the fourth chamber 24 corresponds to the permeation-side space. The second separation membrane 21 is disposed in the tank 22. In the tank 22, the second separation membrane 21 separates the third chamber 23 and the fourth chamber 24 from each other. The second separation membrane 21 extends from one of a pair of wall surfaces of the tank 22 to the other.

The third chamber 23 has the inlet 23a and the outlet 23b. The fourth chamber 24 has the outlet 24a. The inlet 23a of the third chamber 23 is an opening for providing the first permeated gas 80 to the second separation membrane unit 20. The outlet 24a of the fourth chamber 24 is an opening for discharging, from the second separation membrane unit 20, a second permeated gas 90 obtained by allowing the first permeated gas 80 to permeate through the second separation membrane 21. The outlet 23b of the third chamber 23 is an opening for discharging, from the second separation membrane unit 20, the first permeated gas 80 (a second non-permeated gas 91) not having permeated through the second separation membrane 21. The inlet 23a, the outlet 23b, and the outlet 24a are formed, for example, in wall surfaces of the tank 22.

The second separation membrane 21 allows, for example, the sub-component gas contained in the first permeated gas 80 to preferentially permeate therethrough. As the second separation membrane 21, the separation membranes mentioned as examples of the first separation membrane 11 can be used. A membrane area of the second separation membrane 21 can be set as appropriate in accordance with conditions for separating the first permeated gas 80.

The second separation membrane 21 may or may not be the same as the first separation membrane 11 except for the membrane area. In one example, at least one selected from the group consisting of the first separation membrane 11 and the second separation membrane 21 may include a polyether block amide resin or an ionic liquid as a material of the separation functional layer, and it is preferable that both of the first separation membrane 11 and the second separation membrane 21 include a polyether block amide resin or an ionic liquid as a material of the separation functional layer.

The first separation membrane unit 10 and the second separation membrane unit 20 included in the gas separation system 100 are suitable for a flow-type (continuous-type) membrane separation method. However, these separation membrane units may be used for a batch-type membrane separation method.

[Method for Separating Gas mixture]

In the present embodiment, a method for separating the gas mixture 70 includes a first separation step in which the first separation membrane unit 10 is used and a second separation step in which the second separation membrane unit 20 is used.

The first separation step is performed as follows, for example. First, the gas mixture 70 is supplied to the first chamber 13 (the supply-side space) of the first separation membrane unit 10 via the gas mixture supply passage 30. The gas mixture 70 is, for example, supplied to the first chamber 13 at an atmospheric pressure (101 kPa, for example) in a measurement environment without the pressure of the gas mixture 70 being increased. It should be noted that the pressure of the gas mixture 70 may be increased by the pressurizing device 54 in a range not exceeding 700 kPa. By increasing the pressure of the gas mixture 70 to this extent, it tends to be possible to reduce the membrane area of the first separation membrane 11 required to separate the gas mixture 70 while reducing energy required to separate the gas mixture 70. The pressure of the gas mixture 70, that is, a pressure in the supply-side space of the first separation membrane unit 10, may be, for example, 101 kPa or more, 150 kPa or more, 200 kPa or more, 300 kPa or more, or 400 kPa or more. The upper limit of the pressure of the gas mixture 70 may be 600 kPa or 500 kPa. In the present description, the term "pressure" means an absolute pressure unless otherwise noted.

As described above, the gas mixture 70 contains carbon dioxide and nitrogen. Typically, the gas mixture 70 contains nitrogen as the main component gas and carbon dioxide as the sub-component gas. It should be noted that the gas separation system 100 of the present embodiment can also be used to separate the gas mixture 70 having a composition other than the above. For example, the main component gas may be one selected from a nonpolar gas such as hydrogen and methane, and an inert gas such as helium. In some cases, the main component gas may be one selected from acid gases such as carbon dioxide. The gas mixture 70 may contain, as the sub-component gas, oxygen and an acid gas other than carbon dioxide instead of carbon dioxide or with carbon dioxide. Examples of the acid gas other than carbon dioxide include hydrogen sulfide, carbonyl sulfide, a sulfur oxide ($SO_x$), hydrogen cyanide, and a nitrogen oxides ($NO_x$). In some cases, the gas mixture 70 may contain, as the sub-component gas, a nonpolar gas such as nitrogen, hydrogen, methane, and oxygen, and an inert gas such as helium. In one example, the gas mixture may contain hydrogen as the main component gas and carbon dioxide as the sub-component gas. The gas mixture may contain methane as the main component gas and carbon dioxide as the sub-component gas.

A content of the main component gas (nitrogen, for example) in the gas mixture 70 is, for example, 50 wt% or more, preferably 60 wt% or more, more preferably 70 wt% or more, still more preferably 75 wt% or more, particularly preferably 80 wt% or more, and especially preferably 85 wt% or more. It may be 90 wt% or more, and in some cases, it may be 95 wt% or more or 99 wt% or more. The upper limit of the content of the main component gas in the gas mixture 70 is not particularly limited and it is 99.9 wt%, for example, and it may be 99 wt% or 95 wt%. A content of the sub-component gas (carbon dioxide, for example) in the gas mixture 70 is, for example, less than 50 wt% and preferably 40 wt% or less, more preferably 30 wt% or less, still more preferably 25 wt% or less, particularly preferably 20 wt% or less, and especially preferably 15 wt% or less. It may be 10 wt% or less, and in some cases, it may be 5 wt% or less or 1 wt% or less. The lower limit of the content of the sub-component gas in the gas mixture 70 is not particularly limited and it is 0.1 wt%, for example, and it may be 1 wt% or 5 wt%. Preferably, The content of the sub-component gas, especially carbon dioxide, in the gas mixture 70 is 5 wt% or more. In the present description, the term "content" means a value under standard conditions (0°C, 101 kPa) unless otherwise specified.

A content $C_{CO2}$ (wt%) of carbon dioxide in the gas mixture 70 and a content $C_{N2}$ (wt%) of nitrogen in the gas mixture 70 may satisfy relational expression (1) below. When the relational expression (1) is satisfied, it tends to be possible to significantly reduce energy required by the gas separation system 100.

$$C_{CO2} < C_{N2}/4 \quad (1)$$

Next, an inside of the second chamber 14 (the permeation-side space) is decompressed in the state in which the gas mixture 70 has been supplied to the first chamber 13 of the first separation membrane unit 10. Specifically, the inside of the second chamber 14 is decompressed via the outlet 14a by using the first decompression device 50. The pressure in the permeation-side space is, for example, 70 kPa or less, preferably 50 kPa or less, more preferably 30 kPa or less, still more preferably 10 kPa or less, and particularly preferably 5 kPa or less. Considering energy (power) required to operate the first decompression device 50, the pressure in the permeation-side space may be 1 kPa or more, 2 kPa or more, or 5 kPa or more.

The decompressing of the inside of the second chamber 14 causes or increases a pressure difference between the supply-side space and the permeation-side space. Thereby, the gas mixture 70 is separated by the first separation membrane 11 and the first permeated gas 80 is supplied to the second chamber 14. While the gas mixture 70 is being separated, the inside of the second chamber 14 may be continued to be decompressed by the first decompression device 50. The pressure difference between the supply-side space and the permeation-side space of the first separation membrane unit 10 is adjusted, for example, to 500 kPa or less, preferably 400 kPa or less, more preferably 300 kPa or less, still more preferably 200 kPa or less, and particularly preferably 100 kPa or less from the viewpoint of reducing energy to be consumed by the gas separation system 100. The lower limit of the pressure difference between the supply-side space and the permeation-side space of the first separation membrane unit 10 is not particularly limited and it is 10 kPa, for example.

The first permeated gas 80 supplied to the second chamber 14 passes through the first portion 32a of the permeated gas supply passage 32 and is, for example, drawn by the first decompression device 50. The first decompression device 50 discharges, to the second portion 32b of the permeated gas supply passage 32, the first permeated gas 80 drawn, for example. Since the first permeated gas 80 is supplied to the second portion 32b, a pressure in the second portion 32b is usually maintained at the level of the atmospheric pressure in a measurement environment. The first permeated gas 80 is supplied to the second separation membrane unit 20 via the second portion 32b.

As described above, the first separation membrane 11 of the first separation membrane unit 10 allows, for example, the sub-component gas contained in the gas mixture 70 to preferentially permeate therethrough. Accordingly, the first permeated gas 80 obtained by the first separation step has a content of the sub-component gas higher than that in the gas mixture 70. The content of the sub-component gas (carbon dioxide, for example) in the first permeated gas 80 obtained by the first separation step is not particularly limited and it is 30 wt% to 80 wt%, for example. A ratio of the content (wt%) of the sub-component gas in the first permeated gas 80 with respect to the content (wt%) of the sub-component gas in the gas mixture 70 is not particularly limited and it is 2 to 10, for example.

On the other hand, a concentration of the main component gas in the gas mixture 70 gradually increases from the inlet 13a toward the outlet 13b in the first chamber 13. A content of the main component gas (nitrogen, for example) in the gas mixture 70 (the first non-permeated gas 81) processed in the first chamber 13 is, for example, 95 wt% or more, preferably 97 wt% or more, more preferably 98 wt% or more, and still more preferably 99 wt% or more. The first non-permeated gas 81 is discharged to an outside of the first separation membrane unit 10 via the outlet 13b. The first non-permeated gas 81 is discharged from the discharge outlet 42 via the first discharge passage 34.

The second separation step is performed as follows, for example. First, the first permeated gas 80 is supplied to the third chamber 23 (the supply-side space) of the second separation membrane unit 20 via the second portion 32b of the permeated gas supply passage 32. The first permeated gas 80 is, for example, supplied, at an atmospheric pressure (101 kPa, for example) in a measurement environment, to the third chamber 23 without a pressure of the first permeated gas 80 being increased. It should be noted that the pressure of the first permeated gas 80 may be increased by the pressurizing device provided to the second portion 32b in a range not exceeding 700 kPa. The pressure of the first permeated gas 80, that is, a pressure in the supply-side space of the second separation membrane unit 20, may be, for example, 101 kPa or more, 150 kPa or more, 200 kPa or more, 300 kPa or more, or 400 kPa or more. The upper limit of the pressure of the first permeated gas 80 may be 600 kPa or 500 kPa.

Next, an inside of the fourth chamber 24 (the permeation-side space) is decompressed in the state in which the first permeated gas 80 has been supplied to the third chamber 23 of the second separation membrane unit 20. Specifically, the inside of the fourth chamber 24 is decompressed via the outlet 24a by using the second decompression device 52. The pressure in the permeation-side space is, for example, 70 kPa or less, preferably 50 kPa or less, more preferably 30 kPa or less, still more preferably 10 kPa or less, and particularly preferably 5 kPa or less. Considering energy (power) required to operate the second decompression device 52, the pressure in the permeation-side space may be 1 kPa or more, 2 kPa or more, 5 kPa or more, 10 kPa or more, 15 kPa or more, 20 kPa or more, or 30 kPa or more.

The decompressing of the inside of the fourth chamber 24 causes or increases a pressure difference between the supply-side space and the permeation-side space. Thereby, the first permeated gas 80 is separated by the second separation membrane 21 and the second permeated gas 90 is supplied to the fourth chamber 24. While the first permeated gas 80 is being separated, the inside of the fourth chamber 24 may be continued to be decompressed by the second decompression device 52. From the viewpoint of reducing the energy to be consumed by the gas separation system 100, the pressure difference between the supply-side space and the permeation-side space of the second separation membrane unit 20 is adjusted, for example, to 500 kPa or less, preferably 400 kPa or less, more preferably 300 kPa or less, still more preferably 200 kPa or less, and particularly preferably 100 kPa or less. The lower limit of the pressure difference between the supply-side space and the permeation-side space of the second separation membrane unit 20 is not particularly limited and it is 10 kPa, for example.

The second permeated gas 90 supplied to the fourth chamber 24 passes through the first portion 36a of the second discharge passage 36 and is, for example, drawn by the second decompression device 52. The second decompression device 52 discharges, to the second portion 36b of the second discharge passage 36, the second permeated gas 90 drawn, for example. The second permeated gas 90 is delivered to the tank 60 via the second portion 36b.

As described above, the second separation membrane 21 of the second separation membrane unit 20 allows, for example, the sub-component gas contained in the first permeated gas 80 to preferentially permeate therethrough. Accordingly, the second permeated gas 90 obtained by the second separation step has a content of the sub-component gas higher than that in the first permeated gas 80. The content of the sub-component gas (carbon dioxide, for example) in the second permeated gas 90 obtained by the second separation step is not particularly limited and it is, for example, 80 wt% or more, preferably 85 wt% or more, more preferably 90 wt% or more, and still more preferably 95 wt% or more. A ratio (wt%) of the content of the sub-component gas in the second permeated gas 90 with respect to the content (wt%) of the sub-component gas in the first permeated gas 80 is not particularly limited and it is 1.2 to 3, for example.

On the other hand, a concentration of the main component gas in the first permeated gas 80 gradually increases from the inlet 23a toward the outlet 23b in the third chamber 23. A content of the main component gas (nitrogen, for example) in the first permeated gas 80 (the second non-permeated gas 91) processed in the third chamber 23 is not particularly limited and it is 60 wt% to 90 wt%, for example. The second non-permeated gas 91 is discharged to an outside of the second separation membrane unit 20 via the outlet 23b.

In the separation method of the present embodiment, it is preferable to perform the first separation step and the second separation step successively. That is, it is preferable that the first permeated gas 80 separated by the first separation step be immediately supplied to the second separation step without being collected into a tank, etc. Performing the first separation step and the second separation step successively makes it possible to easily increase an amount of the gas mixture 70 to be processed per unit time.

In an embodiment in which the separation membrane of the separation membrane unit (the first separation membrane unit 10 or the second separation membrane unit 20) allows the sub-component gas to preferentially permeate therethrough, the higher the content of the sub-component gas in the gas supplied to the separation membrane unit becomes, the more easily a partial pressure difference of the sub-component gas between the supply-side space and the permeation-side space of the separation membrane unit can be increased by decompressing the permeation-side space of the separation membrane unit. Therefore, in the case where the content of the sub-component gas in the gas supplied to the separation membrane unit is high, by setting the pressure in the permeation-side space of the separation membrane unit high to a certain extent, it is possible to reduce the energy (power) required to operate the decompression device (the first decompression device 50 or the second decompression device 52) without significantly deteriorating the separation performance of the separation membrane unit. As just described above, it is preferable that the pressure in the permeation-side space of the separation membrane unit be adjusted in accordance with the composition of the gas to be supplied to the separation membrane unit, especially the content of the sub-component gas.

As an example, in the separation method of the present embodiment, a least one of the following may hold in the case where the sub-component gas is carbon dioxide: (i) In the first separation step, when the pressure in the permeation-side space of the first separation membrane unit 10 is denoted as P (kPa) and the content of the carbon dioxide in the gas mixture 70 is denoted as x (wt%), relational expression (A) below is satisfied; and (ii) In the second separation step, when the pressure in the permeation-side space of the second separation membrane unit 20 is denoted as P (kPa) and the content of the carbon dioxide in the first permeated gas 80 is denoted as x (wt%), the relational expression (A) is satisfied.

$$0.2e^{0.0536x} \leq P \leq 0.55e^{0.0536x} \qquad (A)$$

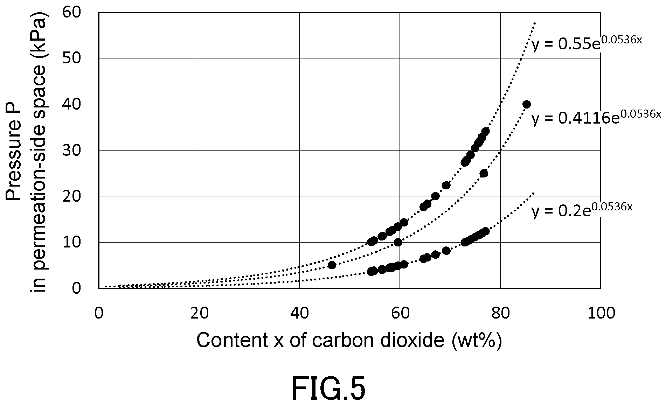

FIG. 5 is a graph for explaining the relational expression (A). In this graph, the horizontal axis indicates the content x of the carbon dioxide in the gas supplied to the separation membrane unit. The vertical axis indicates the pressure P in the permeation-side space of the separation membrane unit. According to the studies by the present inventors, adjusting the pressure P to a range in which the relational expression (A) is satisfied makes it possible to reduce the required power of the decompression device without significantly deteriorating the separation performance of the separation membrane unit. Specifically, by setting the pressure P in a range in which the relational expression (A) is satisfied based on the content x of the carbon dioxide, it tends to be possible to reduce the required power of the decompression device without significantly increasing the membrane area of the separation membrane required to separate the gas in the separation membrane unit. The pressure P (kPa) in the permeation-side space of the separation membrane unit and the content x (wt%) of the carbon dioxide in the gas to be supplied to the separation membrane unit may satisfy relational expression (B) below.

$$P = 0.4116e^{0.0536x} \qquad (B)$$

The relational expression (B) is an expression that shows a relationship between the content x of the carbon dioxide and the pressure P in the permeation-side space and that is suitable for reducing the required power of the decompression device without significantly deteriorating the separation performance of the separation membrane unit. Specifically, the relational expression (B) is an approximated curve created based on simulation results.

As can be seen from the relational expressions (A) and (B), the pressure P in the permeation-side space can be set higher as the content x of the carbon dioxide is higher. Usually, the content of the carbon dioxide in the first permeated gas 80 is higher than the content of the carbon dioxide in the gas mixture 70. Therefore, a pressure P2 in the permeation-side space of the second separation membrane unit 20 in the second separation step may be equal to or higher than a pressure P1 in the permeation-side space of the first separation membrane unit 10 in the first separation step. Preferably, the pressure P2 is higher than the pressure P1.

In the first separation step and the second separation step, the pressure P in the permeation-side space of the separation membrane unit may be changed over time in accordance with a change in the composition of the gas to be supplied to the separation membrane unit, especially a change in the content x of the carbon dioxide. By constantly adjusting the pressure P in the permeation-side space to an appropriate value in accordance with the composition of the gas to be supplied to the separation membrane unit, it is possible to reduce the required power of the decompression device effectively. The change in the composition of the gas to be supplied to the separation membrane unit can be detected by, for example, the gas sensor disposed near the inlet of the separation membrane unit.

The separation method of the present embodiment further includes, for example, a mixing step of mixing the second non-permeated gas 91 with the gas mixture 70. The mixing step can be performed by delivering the second non-permeated gas 91 to the joining point 40 in the gas mixture supply passage 30 via the third discharge passage 38. The mixing step tends to make it possible to recycle the second non-permeated gas 91 and to increase recovery rates of the main component gas and the sub-component gas.

The method for separating the gas mixture 70 of the present embodiment makes it possible, for example, to recover the second permeated gas 90 in which the sub-component gas has been concentrated and the first non-permeated gas 81 in which the main component gas has been concentrated. The recovery rate of the sub-component gas (carbon dioxide, for example) by this separation method is not particularly limited and it is, for example, 80% or more, and preferably 90% or more. The recovery rate of the main component gas is not particularly limited and it is, for example, 90% or more, and preferably 95% or more. The second permeated gas 90 in which carbon dioxide has been concentrated can be used for, for example, producing dry ice, etc. The first non-permeated gas 81 in which nitrogen has been concentrated can be used for industrial purposes, for example.

In conventional gas separation systems, a pressure of a gas mixture to be supplied is usually increased significantly to at least 700 kPa or more. This is also obvious from the fact that an operating pressure is set to at least 7 bar or more in examples of Patent Literature 1. Thus, in an embodiment in which the pressure of the gas mixture is increased, a pressure of a non-permeated gas that does not permeate through a separation membrane in a separation membrane unit is also increased. In this case, the energy consumed to increase the pressure of the non-permeated gas is wasted. In the gas separation system 100 of the present embodiment, it is not necessary to significantly pressurize the supply-side space because the decompression devices 50 and 52 decompress respectively the permeation-side spaces of the separation membrane units 10 and 20 to perform the separation steps. Being able to eliminate the waste of energy caused by pressurizing the supply-side space, the gas separation system 100 of the present embodiment is suitable for reducing the energy required to separate the gas mixture 70. Especially, in the case where the first separation membrane 11 of the first separation membrane unit 10 allows the sub-component gas in the gas mixture 70 to preferentially permeate therethrough, the gas separation system 100 tends to be able to remarkably reduce the energy required to separate the gas mixture 70.

[Modification of First Separation Membrane Unit]

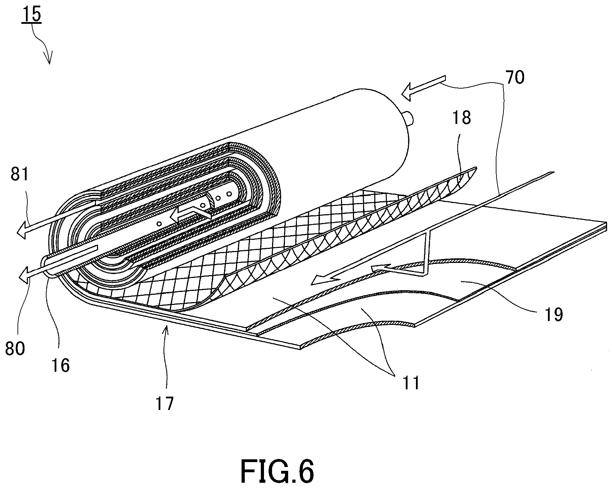

In the gas separation system 100, the first separation membrane unit 10 may be a spiral membrane element as shown in FIG. 6. A first separation membrane unit 15 of FIG. 6 includes a central tube 16 and a laminate 17. The laminate 17 includes the first separation membrane 11.

The central tube 16 has a cylindrical shape. The central tube 16 has a surface with a plurality of holes or slits to allow the first permeated gas 80 to flow into the central tube 16. Examples of a material of the central tube 16 include: resins such as an acrylonitrile-butadiene-styrene copolymer resin (ABS resin), a polyphenylene ether resin (PPE resin), and a polysulfone resin (PSF resin); and metals such as stainless steel and titanium. The central tube 16 has an inner diameter in a range of 20 to 100 mm, for example.

The laminate 17 further includes a supply-side flow passage material 18 and a permeation-side flow passage material 19 in addition to the first separation membrane 11. The laminate 17 is wound around the central tube 16. The first separation membrane unit 15 may further include an exterior material (not shown).

As the supply-side flow passage material 18 and the permeation-side flow passage material 19, a resin net, woven fabric, or knitted fabric composed of polyethylene, polypropylene, polyethylene terephthalate (PET), polyphenylene sulfide (PPS), or an ethylene-chlorotrifluoroethylene copolymer (ECTFE) can be used, for example.

Membrane separation using the first separation membrane unit 15 is performed by the following method, for example. First, the gas mixture 70 is supplied to one end of the wound laminate 17. A space inside the central tube 16 is decompressed. The first permeated gas 80 having permeated through the first separation membrane 11 of the laminate 17 thereby moves into the central tube 16. The first permeated gas 80 is discharged outside via the central tube 16. The gas mixture 70 (the first non-permeated gas 81) processed in the first separation membrane unit 15 is discharged outside from the other end of the wound laminate 17.

In the gas separation system 100, the second separation membrane unit 20 may be a spiral membrane element having the same configuration as that of the first separation membrane unit 15.

<Modification of Gas Separation System>

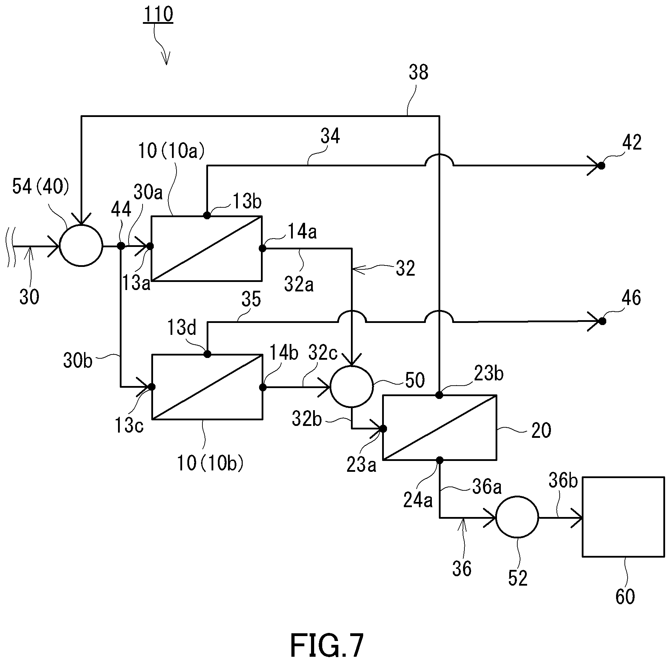

The gas separation system 100 may include a plurality of the first separation membrane units 10. A gas separation system 110 of the present embodiment shown in FIG. 7 has two first separation membrane units 10a and 10b. In the gas separation system 110, the gas mixture supply passage 30 is branched into a first portion 30a and a second portion 30b at a branch point 44. The permeated gas supply passage 32 further has a third portion 32c. The gas separation system 110 further includes a fourth discharge passage 35. Except for these, the structure of the gas separation system 110 of the present embodiment is the same as that of the gas separation system 100. Therefore, the elements common between the gas separation system 100 and the gas separation system 110 of the present embodiment are denoted by the same reference numerals, and the description of such elements may be omitted. That is, the description of one embodiment is applicable to the other embodiment unless technical inconsistency occurs. Furthermore, the features of the embodiments may be combined with each other unless technical inconsistency occurs.

The branch point 44 in the gas mixture supply passage 30 is located, for example, downstream of the joining point 40 (and the pressurizing device 54), that is, between the joining point 40 and the first separation membrane unit 10a. The first portion 30a extends from the branch point 44 to the gas mixture inlet (the inlet 13a) of the first separation membrane unit 10a. The gas mixture 70 can be supplied to the first separation membrane unit 10a via the first portion 30a. The second portion 30b extends from the branch point 44 to a gas mixture inlet (an inlet 13c) of the first separation membrane unit 10b. The gas mixture 70 can be supplied to the first separation membrane unit 10b via the second portion 30b.

The third portion 32c of the permeated gas supply passage 32 extends from a permeated gas outlet (an outlet 14b) of the first separation membrane unit 10b to the first decompression device 50. The first decompression device 50 can decompress a permeation-side space of the first separation membrane unit 10a via the first portion 32a and can also decompress a permeation-side space of the first separation membrane unit 10b via the third portion 32c. The first decompression device 50 draws the first permeated gas having passed through the third portion 32c and discharges the first permeated gas to the second portion 32b, for example. As just described above, the first decompression device 50 may be shared by the first separation membrane units 10 in the gas separation system 110. The embodiment in which the first decompression device 50 is shared by the first separation membrane units 10 is suitable for reducing an installation area for the decompression device and securing a space for it. Furthermore, this embodiment makes it possible to omit members such as a valve, which is also advantageous in terms of costs. In the case where the first decompression device 50 is shared by the first separation membrane units 10, the gas separation system 110 is also suitable for further reducing the energy required to separate the gas mixture 70. It should be noted that the gas separation system 110 may be configured in such a manner as to include a plurality of the first decompression devices 50 and allow the first decompression devices 50 to decompress respectively the permeation-side spaces of the first separation membrane units 10.

The fourth discharge passage 35 is a passage connected to a non-permeated gas outlet (an outlet 13d) of the first separation membrane unit 10b and configured to discharge the first non-permeated gas from the first separation membrane unit 10b. An opening (a discharge outlet 46) for discharging the first non-permeated gas from the fourth discharge passage 35 is formed in the fourth discharge passage 35. The gas separation system 110 may further include a tank (not shown) for storing the first non-permeated gas, and each of the first discharge passage 34 and the fourth discharge passage 35 may be connected to the tank.

In the gas separation system 110, the first separation membrane units 10 may be identical to or different from each other. By allowing the gas separation system 110 to have the first separation membrane units 10, it is possible to easily increase the membrane area of the separation membrane (the first separation membrane 11) that processes the gas mixture 70.

<Another Modification of Gas Separation System>

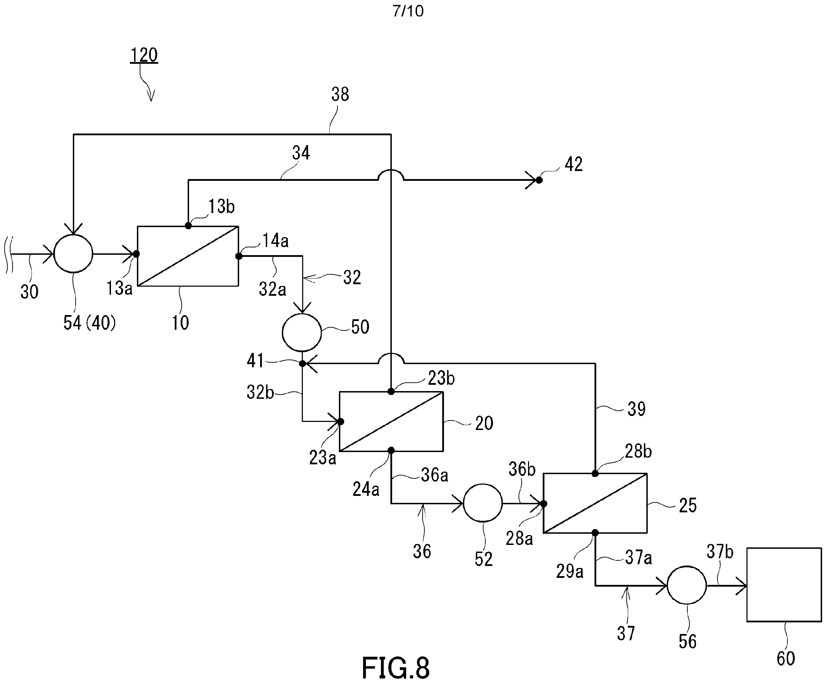

FIG. 8 is a configuration diagram of a gas separation system 120 that is a modification. As shown in FIG. 8, the gas separation system 120 further includes a third separation membrane unit 25, a third decompression device 56, a fifth discharge passage 37, and a sixth discharge passage 39. The second discharge passage 36 is connected to a permeated gas inlet (an inlet 28a) of the third separation membrane unit 25. Except for these, the structure of the gas separation system 120 is the same as that of the gas separation system 100 in FIG. 1.

The third separation membrane unit 25 is a membrane separation device that separates, using the third separation membrane, the second permeated gas discharged from the second separation membrane unit 20. The third separation membrane that the third separation membrane unit 25 has can further separate the second permeated gas into a third permeated gas and a third non-permeated gas.

The third separation membrane of the third separation membrane unit 25 allows, for example, the sub-component gas contained in the second permeated gas, specifically at least one gas contained in the sub-component gas, to preferentially permeate therethrough. Therefore, the third permeated gas separated by the third separation membrane has a content of the sub-component gas higher than that in the second permeated gas and a content of the main component gas lower than that in the second permeated gas. In contrast, the third non-permeated gas has a content of the sub-component gas lower than that in the second permeated gas and a content of the main component gas higher than that in the second permeated gas. In the present description, the "main component gas" and the "sub-component gas" in the third permeated gas and the third non-permeated gas are so named in the same manner as in the case of the first permeated gas based on their contents in the gas mixture before separation by the first separation membrane.

The third decompression device 56 can decompress a permeation-side space of the third separation membrane unit 25. In other words, the third decompression device 56 can cause or increase a pressure difference between a supply-side space and the permeation-side space of the third separation membrane unit 25. A specific example of the third decompression device 56 is a pump. Preferably, the third decompression device 56 is a vacuum device such as a vacuum pump. As the vacuum pump, those mentioned above for the first decompression device 50 can be used. The pump as the third decompression device 56 may include a variable speed mechanism for changing a rotational speed, etc. An example of the variable speed mechanism is an inverter that drives a motor of the pump. By controlling the rotational speed, etc. of the pump by the variable speed mechanism, it is possible to adjust properly a pressure in the permeation-side space of the third separation membrane unit 25.

The third decompression device 56 may be an assembly of a plurality of pumps. That is, the third decompression device 56 may have a configuration that allows each of the pumps to decompress the permeation-side space of the third separation membrane unit 25. This configuration makes it possible to adjust properly the pressure in the permeation-side space of the third separation membrane unit 25 by adjusting the number of the pumps to run.

As described above, the second discharge passage 36 is connected to the inlet 28a of the third separation membrane unit 25. The second discharge passage 36 functions as a passage for supplying the second permeated gas from the second separation membrane unit 20 to the third separation membrane unit 25. The second portion 36b of the second discharge passage 36 may or may not be provided with a pressurizing device (not shown) that increases a pressure of the second permeated gas discharged from the second decompression device 52. This pressurizing device makes it possible to pressurize the supply-side space of the third separation membrane unit 25. Examples of the pressurizing device include a compressor, a blower, and a back pressure valve. The second portion 36b may be provided with a gas sensor for measuring a composition of the second permeated gas. This gas sensor can detect, for example, a content of carbon dioxide in the second permeated gas. Preferably, the gas sensor is disposed near the inlet 28a of the third separation membrane unit 25. By measuring the composition of the second permeated gas to be supplied to the third separation membrane unit 25 by using the gas sensor, it is possible to properly set operating conditions of the third separation membrane unit 25, especially a decompression degree of the permeation-side space of the third separation membrane unit 25.

Preferably, the second discharge passage 36 is provided with no tanks, such as a collector that collects the second permeated gas, or an opening and closing valve that opens and closes the passage. Especially, in the case where the second discharge passage 36 is provided with no collector, it is possible to supply continuously the second permeated gas discharged from the second separation membrane unit 20 to the third separation membrane unit 25. Such a configuration makes it possible to easily increase the amount of the gas mixture 70 to be processed per unit time. In one example, the second discharge passage 36 may be composed only of the second decompression device 52 and a pipe.

The fifth discharge passage 37 is a passage connected to a permeated gas outlet (an outlet 29a) of the third separation membrane unit 25 and an inlet of the tank 60 and configured to deliver the third permeated gas from the third separation membrane unit 25 to the tank 60. The tank 60 can store the third permeated gas delivered from the third separation membrane unit 25. The fifth discharge passage 37 is provided with the third decompression device 56.

The fifth discharge passage 37 has a first portion 37a extending from the third separation membrane unit 25 to the third decompression device 56 and a second portion 37b extending from the third decompression device 56 to the tank 60. The third decompression device 56 can decompress the permeation-side space of the third separation membrane unit 25 via the first portion 37a. The third decompression device 56 draws the third permeated gas having passed through the first portion 37a and discharges the third permeated gas to the second portion 37b, for example. The third decompression device 56 is configured in such a manner as not to discharge the gas having passed through the first portion 37a to an outside of the gas separation system 120, for example. The third decompression device 56 is connected only to the first portion 37a and the second portion 37b, for example. In the case where the third decompression device 56 is an assembly of a plurality of pumps, the first portion 37a of the fifth discharge passage 37 may be branched and connected to an inlet of each of the pumps. Similarly, the second portion 37b of the fifth discharge passage 37 may be branched and connected to an outlet of each of the pumps.

The sixth discharge passage 39 is a passage connected to a non-permeated gas outlet (an outlet 28b) of the third separation membrane unit 25 and configured to discharge the third non-permeated gas from the third separation membrane unit 25. The sixth discharge passage 39 may join the permeated gas supply passage 32, specifically the second portion 32b of the permeated gas supply passage 32, at a joining point 41. Allowing the sixth discharge passage 39 to join the permeated gas supply passage 32 makes it possible, for example, to recycle the third non-permeated gas containing the sub-component gas that the third separation membrane unit 25 has failed to separate.

In the case where the gas separation system 120 includes the controller, the controller can also control, for example, behavior of the third decompression device 56. In one example, when the second permeated gas is supplied from the second discharge passage 36 to the third separation membrane unit 25, the controller controls the third decompression device 56 so as to decompress the permeation-side space of the third separation membrane unit 25. Specifically, while the second permeated gas is being supplied to the third separation membrane unit 25, the controller controls the third decompression device 56 so as to continue decompressing the permeation-side space of the third separation membrane unit 25. In the gas separation system 120, the following holds, for example: (III) the second permeated gas is separated into the third permeated gas and the third non-permeated gas while the permeation-side space of the third separation membrane unit 25 is being decompressed by the third decompression device 56.

The gas separation system 120 of the present embodiment has a configuration in which the third separation membrane unit 25 and the third decompression device 56 are further provided downstream of the second separation membrane unit 20. In the gas separation system 120, a combination of a separation membrane unit and a decompression device may further be provided downstream of the third separation membrane unit 25. The number of the combination of a separation membrane unit and a decompression device provided downstream of the third separation membrane unit 25 can be set as appropriate in accordance with the composition of the gas mixture 70 to be separated. When the gas separation system 120 includes the controller, the controller controls, for example, behavior of each decompression device provided downstream of the third separation membrane unit 25.

[Third Separation Membrane Unit]

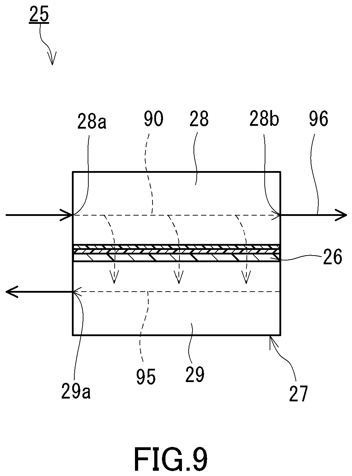

As shown in FIG. 9, the third separation membrane unit 25 includes a third separation membrane 26 and a tank 27. The tank 27 has a fifth chamber 28 and a sixth chamber 29. A space in the fifth chamber 28 corresponds to the supply-side space and a space in the sixth chamber 29 corresponds to the permeation-side space. The third separation membrane 26 is disposed in the tank 27. In the tank 27, the third separation membrane 26 separates the fifth chamber 28 and the sixth chamber 29 from each other. The third separation membrane 26 extends from one of a pair of wall surfaces of the tank 27 to the other.

The fifth chamber 28 has the inlet 28a and the outlet 28b. The sixth chamber 29 has the outlet 29a. The inlet 28a of the fifth chamber 28 is an opening for supplying the second permeated gas 90 to the third separation membrane unit 25. The outlet 29a of the sixth chamber 29 is an opening for discharging, from the third separation membrane unit 25, a third permeated gas 95 obtained by allowing the second permeated gas 90 to permeate through the third separation membrane 26. The outlet 28b of the fifth chamber 28 is an opening for discharging, from the third separation membrane unit 25, the second permeated gas 90 (a third non-permeated gas 96) not having permeated through the third separation membrane 26. The inlet 28a, the outlet 28b, and the outlet 29a are formed, for example, in wall surfaces of the tank 27.

The third separation membrane 26 allows, for example, the sub-component gas contained in the second permeated gas 90 to preferentially permeate therethrough. As the third separation membrane 26, the separation membranes mentioned as examples of the first separation membrane 11 can be used. A membrane area of the third separation membrane 26 can be set as appropriate in accordance with conditions for separating the second permeated gas 90.

The third separation membrane 26 may or may not be the same as the first separation membrane 11 or the second separation membrane 21 except for the membrane area. In one example, at least one selected from the group consisting of the first separation membrane 11, the second separation membrane 21, and the third separation membrane 26 may include a polyether block amide resin or an ionic liquid as a material of the separation functional layer, and it is preferable that each of the first separation membrane 11, the second separation membrane 21, and the third separation membrane 26 include a polyether block amide resin or an ionic liquid as a material of the separation functional layer.

The third separation membrane unit 25 is suitable for a flow-type (continuous-type) membrane separation method. However, the third separation membrane unit 25 may be used for a batch-type membrane separation method.

The third separation membrane unit 25 may be the spiral membrane element mentioned above for the first separation membrane unit 15.

[Method for Separating Gas Mixture]

In the present embodiment, the method for separating the gas mixture 70 further includes a third separation step using the third separation membrane unit 25 in addition to the first separation step and the second separation step described above.

The third separation step is performed as follows, for example. First, the second permeated gas 90 is supplied to the fifth chamber 28 (the supply-side space) of the third separation membrane unit 25 via the second portion 36b of the second discharge passage 36. The second permeated gas 90 is, for example, supplied, at an atmospheric pressure (101 kPa, for example) in a measurement environment, to the fifth chamber 28 without a pressure of the second permeated gas 90 being increased. It should be noted that the pressure of the second permeated gas 90 may be increased by the pressurizing device provided to the second portion 36b in a range not exceeding 700 kPa. The pressure of the second permeated gas 90, that is, a pressure in the supply-side space of the third separation membrane unit 25, may be 101 kPa or more, 150 kPa or more, 200 kPa or more, 300 kPa or more, or 400 kPa or more, for example. The upper limit of the pressure of the second permeated gas 90 may be 600 kPa or 500 kPa.

Next, an inside of the sixth chamber 29 (the permeation-side space) is decompressed in the state in which the second permeated gas 90 has been supplied to the fifth chamber 28 of the third separation membrane unit 25. Specifically, the inside of the sixth chamber 29 is decompressed via the outlet 29a by using the third decompression device 56. The pressure in the permeation-side space is, for example, 70 kPa or less, preferably 50 kPa or less, more preferably 30 kPa or less, still more preferably 10 kPa or less, and particularly preferably 5 kPa or less. Considering energy (power) required to operate the third decompression device 56, the pressure in the permeation-side space may be 1 kPa or more, 2 kPa or more, 5 kPa or more, 10 kPa or more, 15 kPa or more, 20 kPa or more, or 30 kPa or more.

The decompressing of the inside of the sixth chamber 29 causes or increases a pressure difference between the supply-side space and the permeation-side space. Thereby, the second permeated gas 90 is separated by the third separation membrane 26 and the third permeated gas 95 is supplied to the sixth chamber 29. While the second permeated gas 90 is being separated, the inside of the sixth chamber 29 may be continued to be decompressed by the third decompression device 56. From the viewpoint of reducing energy to be consumed by the gas separation system 120, the pressure difference between the supply-side space and the permeation-side space of the third separation membrane unit 25 is adjusted, for example, to 500 kPa or less, preferably 400 kPa or less, more preferably 300 kPa or less, still more preferably 200 kPa or less, and particularly preferably 100 kPa or less. The lower limit of the pressure difference between the supply-side space and the permeation-side space of the third separation membrane unit 25 is not particularly limited and it is 10 kPa, for example.

The third permeated gas 95 supplied to the sixth chamber 29 passes through the first portion 37a of the fifth discharge passage 37 and is, for example, drawn by the third decompression device 56. The third decompression device 56 discharges, to the second portion 37b of the fifth discharge passage 37, the third permeated gas 95 drawn, for example. The third permeated gas 95 is delivered to the tank 60 via the second portion 37b.

As described above, the third separation membrane 26 of the third separation membrane unit 25 allows, for example, the sub-component gas contained in the second permeated gas 90 to preferentially permeate therethrough. Accordingly, the third permeated gas 95 obtained by the third separation step has a content of the sub-component gas higher than that in the second permeated gas 90. The content of the sub-component gas (carbon dioxide, for example) in the third permeated gas 95 obtained by the third separation step is not particularly limited and it is, for example, 80 wt% or more, preferably 85 wt% or more, more preferably 90 wt% or more, and still more preferably 95 wt% or more. A ratio (wt%) of the content of the sub-component gas in the third permeated gas 95 with respect to the content (wt%) of the sub-component gas in the second permeated gas 90 is not particularly limited and it is 1.2 to 3, for example.

On the other hand, a concentration of the main component gas in the second permeated gas 90 gradually increases from the inlet 28a toward the outlet 28b in the fifth chamber 28. A content of the main component gas (nitrogen, for example) in the second permeated gas 90 (the third non-permeated gas 96) processed in the fifth chamber 28 is not particularly limited and it is 60 wt% to 90 wt%, for example. The third non-permeated gas 96 is discharged to an outside of the third separation membrane unit 25 via the outlet 28b.

In the separation method of the present embodiment, it is preferable to perform the first separation step, the second separation step, and the third separation step successively. That is, it is preferable that the second permeated gas 90 separated in the second separation step be supplied immediately to the third separation step without being collected into a tank, etc. Performing the first separation step, the second separation step, and the third separation step successively makes it possible to easily increase the amount of the gas mixture 70 to be processed per unit time.

The pressure in the permeation-side space of the third separation membrane unit 25 may be adjusted in accordance with a composition of the second permeated gas 90 to be supplied to the third separation membrane unit 25, especially the content of the sub-component gas. As an example, in the separation method of the present embodiment, in the case where the sub-component gas is carbon dioxide, the relational expression (A) or the relational expression (B) mentioned above may be satisfied when the pressure in the permeation-side space of the third separation membrane unit 25 is denoted as P (kPa) and the content of the carbon dioxide in the second permeated gas 90 is denoted as x (wt%) in the third separation step.

A pressure P3 in the permeation-side space of the third separation membrane unit 25 in the third separation step may be equal to or higher than the pressure P2 in the permeation-side space of the second separation membrane unit 20 in the second separation step. Preferably, the pressure P3 is higher than the pressure P2.

In the third separation step, the pressure P3 in the permeation-side space of the third separation membrane unit 25 may be changed over time in accordance with a change in the composition of the gas to be supplied to the third separation membrane unit 25, especially a change in the content x of the carbon dioxide. By constantly adjusting the pressure P3 in the permeation-side space to an appropriate value in accordance with the composition of the gas to be supplied to the third separation membrane unit 25, it is possible to reduce the required power of the third decompression device 56 effectively. The change in the composition of the gas to be supplied to the third separation membrane unit 25 can be detected by, for example, the gas sensor disposed near the inlet 28a of the third separation membrane unit 25.

The separation method of the present embodiment further includes, for example, a second mixing step of mixing the third non-permeated gas 96 with the first permeated gas 80. The second mixing step can be performed by delivering the third non-permeated gas 96 to the joining point 41 in the permeated gas supply passage 32 via the sixth discharge passage 39. The second mixing step tends to make it possible to recycle the third non-permeated gas 96 and to increase the recovery rates of the main component gas and the sub-component gas.

The method for separating the gas mixture 70 of the present embodiment makes it possible, for example, to recover the third permeated gas 95 in which the sub-component gas has been concentrated and the first non-permeated gas 81 in which the main component gas has been concentrated. The recovery rate of the sub-component gas (carbon dioxide, for example) by this separation method is not particularly limited and it is, for example, 80% or more, and preferably 90% or more. The recovery rate of the main component gas is not particularly limited and it is, for example, 90% or more, and preferably 95% or more.

The method for separating the gas mixture 70 of the present embodiment using the gas separation system 120 is suitable for separating the gas mixture 70 having a low content of the sub-component gas. Specifically, the method for separating the gas mixture 70 of the present embodiment is suitable for separating the gas mixture 70 (air, for example) in which the content of the sub-component gas, especially carbon dioxide, is 1 wt% or less.

EXAMPLES

Hereinafter, the present invention will be described in more detail by way of examples, but the present invention is not limited to these examples.

(Separation Membrane A)

First, 10 g of a silicone solution (YSR3022 available from Momentive Performance Materials Inc.) was diluted with 140 g of normal decane (available from Sankyo Chemical Co., Ltd.) to prepare a 2 mass% silicone solution. A step of immersing an ultrafiltration membrane (NTU-3175M available from Nitto Denko Corporation) in the prepared silicone solution for 5 seconds, draining the ultrafiltration membrane for 40 seconds, and drying it in a dryer at 120°C for 2 minutes was performed two times to form a silicone layer (an intermediate layer) with a thickness of 2 $\mu$m on the ultrafiltration membrane. A surface of the formed silicone layer was subject to a hydrophilization treatment at an intensity of 1 J/cm$^2$ using a table-type corona treatment apparatus (available from Kasuga Denki, Inc.).

Next, 2 g of polyether block amide (Pebax MH1657 available from Arkema) was put in 98 g of a 70 mass% isopropanol aqueous solution and the resultant mixture was stirred at 80°C for 3 hours to prepare a 2 mass% Pebax solution. The prepared solution was spread out on the silicone layer and spin coating was performed at a rotational speed of 2000 rpm for 40 seconds. Next, the obtained coating was dried in an oven at 60°C for 30 minutes to form a separation functional layer. Thereby, a separation membrane A was obtained.

(Separation Membrane B)

A separation membrane B was produced by the same method as that used for the separation membrane A, except that a coating liquid containing a double-network gel was used instead of the coating liquid containing polyether block amide. The double-network gel included a first network structure, a second network structure, and an ionic liquid. The first network structure had a structural unit derived from dimethylacrylamide and further was composed of a polymer including a cross-linked structure. The second network structure was composed of silica particles (AEROSIL200 available from Nippon Aerosil Co., Ltd.). As the ionic liquid, 1-ethyl-3-methylimidazolium dicyanamide (EMI-DCA) was used. The content of the first network structure, the content of the second network structure, and the content of the ionic liquid in the double-network gel were 15 wt%, 5 wt%, and 80 wt%, respectively.

(Separation Membrane C)

A separation membrane C was produced by the same method as that used for the separation membrane B, except that 1-ethyl-3-methylimidazolium tricyanomethanide (EMI-C(CN)$_3$) was used as the ionic liquid instead of the EMI-DCA.

[Characteristics Evaluation on Separation Membranes]

Next, each of the separation membranes A to C was measured for the permeation rate $T_1$ of carbon dioxide, the permeation rate $T_2$ of nitrogen, and the separation factor $\alpha$ (CO$_2$/N$_2$) that the separation membrane has for carbon dioxide with respect to nitrogen by the following method. First, the separation membrane was placed in a metal cell, and the metal cell was sealed with an O-ring so that no leakage occurred. Next, a gas mixture was injected into the metal cell such that the gas mixture was in contact with a main surface, on the separation functional layer side, of the separation membrane. The gas mixture was composed substantially of carbon dioxide and nitrogen. The concentration of the carbon dioxide in the gas mixture was 50 vol% under the standard conditions. The temperature of the gas mixture injected into the metal cell was 30°C. The pressure of the gas mixture was 0.1 MPa. Thereby, a permeated gas was obtained from a main surface, on the porous support member side, of the separation membrane. The permeation rate $T_1$ of the carbon dioxide, the permeation rate $T_2$ of the nitrogen, and the separation factor $\alpha$ were calculated based on the composition of the obtained permeated gas, the weight of the permeated gas, etc. Table 1 shows the results.

Table 1

| Separation membrane | Component of separation functional layer | CO$_2$ permeation rate $T_1$ [GPU] | N2 permeation rate $T_2$ [GPU] | $\alpha$ (CO$_2$/N$_2$) |
|---|---|---|---|---|
| A | PEBAX | 130.3 | 3.5 | 37.2 |
| B | Double-network gel (Ionic liquid: EMI-DCA) | 171.0 | 3.1 | 54.6 |
| C | Double-network gel (Ionic liquid: EMI-C(CN)$_3$) | 397.0 | 10.5 | 37.9 |

(Calculation Examples 1 to 19)

Next, the operation of the gas separation system shown in FIG. 1 was simulated using the separation membranes A to C. Specifically, the operating conditions of the separation membrane units, the type of the separation membrane used in each of the separation membrane units, the composition of the gas mixture, the composition of the second permeated gas, etc. were determined beforehand, and the energy and the membrane area of the separation membrane required to separate the gas mixture using the gas separation system were calculated in each case. More specifically, the powers of the decompression devices 50 and 52 in FIG. 1 and the membrane areas of the separation membranes 11 and 21 were calculated using Symmetry, a process modeling software available from Schlumberger Ltd.

As for Calculation Examples 1 to 19, the pressure in the supply-side space of each of the separation membrane units and the type of the separation membrane used were changed and the influences thereof were observed. For example, in Calculation Example 1, the properties of the separation membranes 11 and 21 were set to the values of the separation membrane A shown in Table 1 (permeation rate $T_1$: 130.3 GPU, selectivity $\alpha$: 37.2). In the separation membrane units 10 and 20, the pressure of the gas to be supplied (the pressure in the supply-side space) was set to an atmospheric pressure (101.33 kPa) and the pressure in the permeation-side space was set to an almost vacuum value (1 kPa). The gas flow rate of the carbon dioxide contained in the gas mixture to be supplied to the first separation membrane unit 10 was set to 300 t/year (34.25 kg/hr), the content of the carbon dioxide was set to 10 wt%, and the temperature of the gas mixture was set to 25°C. Furthermore, the temperatures of the first non-permeated gas and the second permeated gas finally obtained were set to 25°C, and the pressures of these gases were set to 101.33 kPa. The content of the carbon dioxide in the second permeated gas was set to 95 wt%, and the recovery rate of the carbon dioxide was set to 90% (30.82 kg/hr). The adiabatic efficiencies of the decompression devices 50 and 52 were set to 70% that is a common value. Tables 2 and 3 show the results.

[Table 2]

| | | | Calculation Example | | | | | | | | | |
|---|---|---|---|---|---|---|---|---|---|---|---|---|
| | | | 1 | 2 | 3 | 4 | 5 | 6 | 7 | 8 | 9 | 10 |
| Set value | First separation membrane unit | Pressure in supply-side space (kPa) | 101 | 101 | 101 | 200 | 200 | 200 | 400 | 400 | 400 | 400 |
| | | Pressure in permeation-side space (kPa) | 1 | 1 | 1 | 1 | 1 | 1 | 1 | 1 | 1 | 1 |
| | Second separation membrane unit | Pressure in supply-side space (kPa) | 101 | 101 | 101 | 101 | 101 | 101 | 101 | 400 | 101 | 101 |
| | | Pressure in permeation-side space (kPa) | 1 | 1 | 1 | 1 | 1 | 1 | 1 | 1 | 1 | 1 |
| | Gas mixture | $CO_2$ content (wt%) | 10 | 10 | 10 | 10 | 10 | 10 | 10 | 10 | 10 | 10 |
| | | $CO_2$ weight (t) | 300 | 300 | 300 | 300 | 300 | 300 | 300 | 300 | 300 | 300 |
| | | $N_2$ content (wt%) | 90 | 90 | 90 | 90 | 90 | 90 | 90 | 90 | 90 | 90 |
| | | $N_2$ weight (t) | 2700 | 2700 | 2700 | 2700 | 2700 | 2700 | 2700 | 2700 | 2700 | 2700 |
| | Second permeated gas | $CO_2$ content (wt%) | 95 | 95 | 95 | 95 | 95 | 95 | 95 | 95 | 95 | 95 |
| | | $CO_2$ recovery rate (%) | 90 | 90 | 90 | 90 | 90 | 90 | 90 | 90 | 90 | 90 |
| | Separation membrane of first separation membrane unit | | A | A | C | A | A | C | A | A | A | C |
| | Separation membrane of second separation membrane unit | | A | C | A | A | C | A | A | A | C | A |

(continued)

| | | | Calculation Example | | | | | | | | | |
|---|---|---|---|---|---|---|---|---|---|---|---|---|
| | | | 1 | 2 | 3 | 4 | 5 | 6 | 7 | 8 | 9 | 10 |
| Calculated value | First non-permeated gas | $N_2$ content (wt%) | 98.90 | 98.90 | 98.90 | 98.90 | 98.90 | 98.90 | 98.89 | 98.89 | 98.89 | 98.89 |
| | | $N_2$ recovery rate (%) | 99.47 | 99.47 | 99.47 | 99.47 | 99.47 | 99.47 | 99.47 | 99.47 | 99.47 | 99.47 |
| | Required membrane area of separation membrane ($m^2$) | First separation membrane unit | 214795 | 2147.95 | 715.96 | 976.78 | 976.78 | 325.58 | 461.02 | 459.56 | 461.02 | 153.67 |
| | | Second separation membrane unit | 180.93 | 60.31 | 180.94 | 180.72 | 60.24 | 180.72 | 180.88 | 45.48 | 60.29 | 180.88 |
| | | Total value | 2328.88 | 2208.26 | 896.89 | 1157.49 | 1037.01 | 506.30 | 641.89 | 505.03 | 521.31 | 334.55 |
| | Required energy (MWh) | First separation membrane unit (pressurization) | - | - | - | 81.16 | 81.16 | 81.16 | 180.62 | 180.48 | 180.62 | 180.62 |
| | | First separation membrane unit (decompression) | 119.19 | 119.19 | 119.19 | 111.08 | 111.08 | 111.08 | 107.09 | 106.56 | 107.09 | 107.09 |
| | | Second separation membrane unit | 50.15 | 50.15 | 50.15 | 50.15 | 50.15 | 50.15 | 50.15 | 71.16 | 50.15 | 50.15 |
| | | Total value | 169.34 | 169.34 | 169.34 | 242.40 | 242.40 | 242.40 | 337.86 | 358.21 | 337.86 | 337.86 |
| | MWh/t-$CO_2$ (*1) | | 0.63 | 0.63 | 0.63 | 0.90 | 0.90 | 0.90 | 1.25 | 1.33 | 1.25 | 1.25 |
| | MWh/t-$N_2$ (*2) | | 0.06 | 0.06 | 0.06 | 0.09 | 0.09 | 0.09 | 0.13 | 0.13 | 0.13 | 0.13 |

(*1) Ratio of the total value (MWh) of the required energies with respect to the weight (t) of the recovered $CO_2$.
(*2) Ratio of the total value (MWh) of the required energies with respect to the weight (t) of the recovered $N_2$.

[Table 3]

| | | | Calculation Example | | | | | | | | |
|---|---|---|---|---|---|---|---|---|---|---|---|
| | | | 11 | 12 | 13 | 14 | 15 | 16 | 17 | 18 | 19 |
| Set value | First separation membrane unit | Pressure in supply-side space (kPa) | 101 | 101 | 101 | 200 | 200 | 200 | 400 | 400 | 400 |
| | | Pressure in permeation-side space (kPa) | 1 | 1 | 1 | 1 | 1 | 1 | 1 | 1 | 1 |
| | Second separation membrane unit | Pressure in supply-side space (kPa) | 101 | 101 | 101 | 101 | 101 | 101 | 101 | 101 | 101 |
| | | Pressure in permeation-side space (kPa) | 1 | 1 | 1 | 1 | 1 | 1 | 1 | 1 | 1 |
| | Gas mixture | $CO_2$ content (wt%) | 10 | 10 | 10 | 10 | 10 | 10 | 10 | 10 | 10 |
| | | $CO_2$ weight (t) | 300 | 300 | 300 | 300 | 300 | 300 | 300 | 300 | 300 |
| | | $N_2$ content (wt%) | 90 | 90 | 90 | 90 | 90 | 90 | 90 | 90 | 90 |
| | | $N_2$ weight (t) | 2700 | 2700 | 2700 | 2700 | 2700 | 2700 | 2700 | 2700 | 2700 |
| | Second permeated gas | $CO_2$ content (wt%) | 95 | 95 | 95 | 95 | 95 | 95 | 95 | 95 | 95 |
| | | $CO_2$ recovery rate (%) | 90 | 90 | 90 | 90 | 90 | 90 | 90 | 90 | 90 |
| | Separation membrane of first separation membrane unit | | C | C | B | C | C | B | C | C | B |
| | Separation membrane of second separation membrane unit | | C | B | C | C | B | C | C | B | C |

(continued)

| | | | Calculation Example | | | | | | | | |
|---|---|---|---|---|---|---|---|---|---|---|---|
| | | | 11 | 12 | 13 | 14 | 15 | 16 | 17 | 18 | 19 |
| Calculated value | First non-permeated gas | $N_2$ content (wt%) | 98.90 | 98.90 | 98.90 | 98.90 | 98.90 | 98.89 | 98.90 | 98.90 | 98.90 |
| | | $N_2$ recovery rate (%) | 99.47 | 99.47 | 99.47 | 99.47 | 99.47 | 99.47 | 99.48 | 99.47 | 99.47 |
| | Required membrane area of separation membrane ($m^2$) | First separation membrane unit | 715.96 | 699.50 | 1669.71 | 325.42 | 319.02 | 740.56 | 153.84 | 151.13 | 347.15 |
| | | Second separation membrane unit | 60.31 | 189.22 | 60.32 | 60.31 | 189.24 | 60.33 | 60.31 | 189.15 | 60.33 |
| | | Total value | 776.27 | 888.73 | 1730.03 | 385.74 | 508.26 | 800.89 | 214.15 | 340.28 | 407.48 |
| | Required energy (MWh) | First separation membrane unit (pressurization) | - | - | - | 81.15 | 80.82 | 79.18 | 180.64 | 180.00 | 176.44 |
| | | First separation membrane unit (decompression) | 119.19 | 114.52 | 9408 | 111.03 | 107.41 | 87.65 | 107.18 | 104.07 | 84.91 |
| | | Second separation membrane unit | 50.15 | 50.17 | 50.18 | 50.16 | 50.17 | 50.15 | 50.16 | 50.17 | 50.18 |
| | | Total value | 169.34 | 164.69 | 144.26 | 242.34 | 238.40 | 216.99 | 337.98 | 334.24 | 311.54 |
| | MWh/t-$CO_2$ (*1) | | 0.63 | 0.61 | 0.53 | 0.90 | 0.88 | 0.80 | 1.25 | 1.24 | 1.15 |
| | MWh/t-$N_2$ (*2) | | 0.06 | 0.06 | 0.05 | 0.09 | 0.09 | 0.08 | 0.13 | 0.12 | 0.12 |
| (*1) Ratio of the total value (MWh) of the required energies with respect to the weight (t) of the recovered $CO_2$. (*2) Ratio of the total value (MWh) of the required energies with respect to the weight (t) of the recovered $N_2$. | | | | | | | | | | | | |

(Calculation Examples 20 to 25)

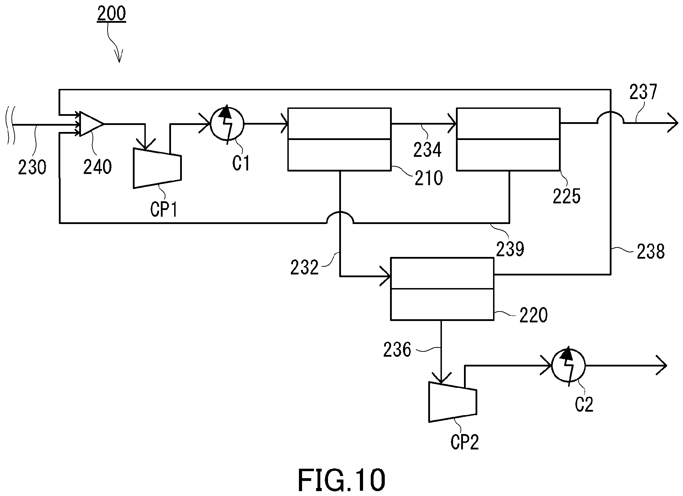

Next, the operation of the gas separation system disclosed in Patent Literature 1 was simulated. Specifically, it was assumed to operate a gas separation system 200 shown in FIG. 10 to separate the gas mixture.

The gas separation system 200 includes a first separation membrane unit 210, a second separation membrane unit 220, and a third separation membrane unit 225. The first separation membrane unit 210 and the second separation membrane unit 220 correspond respectively to the first separation membrane unit 10 and the second separation membrane unit 20 of the gas separation system 100 in FIG. 1. The third separation membrane unit 225 in FIG. 10 is a membrane separation device that separates, using a third separation membrane, a first non-permeated gas discharged from the first separation membrane unit 210. The third separation membrane can separate the first non-permeated gas into a third permeated gas and a third non-permeated gas.

The gas separation system 200 includes a gas mixture supply passage 230, a permeated gas supply passage 232, a first discharge passage 234, a second discharge passage 236, a third discharge passage 238, a fourth discharge passage 237, and a fifth discharge passage 239. The gas mixture supply passage 230 is a passage for supplying the gas mixture to the first separation membrane unit 210. The gas mixture supply passage 230 is provided with a compressor CP1 and a heat exchanger C1. The compressor CP1 can increase the pressure of the gas mixture.

The permeated gas supply passage 232 is a passage for supplying a first permeated gas from the first separation membrane unit 210 to the second separation membrane unit 220. The permeated gas supply passage 232 is provided with no decompression device. The first discharge passage 234 is a passage for delivering the first non-permeated gas from the first separation membrane unit 210 to the third separation membrane unit 225.

The second discharge passage 236 is a passage for discharging a second permeated gas from the second separation membrane unit 220. The second discharge passage 236 is provided with a decompression device CP2 and a heat exchanger C2.

The third discharge passage 238 is a passage for discharging a second non-permeated gas from the second separation membrane unit 220. The third discharge passage 238 joins the gas mixture supply passage 230 at a joining point 240 and can deliver the second non-permeated gas to the gas mixture supply passage 230.

The fourth discharge passage 237 is a passage for discharging the third non-permeated gas from the third separation membrane unit 225. The fifth discharge passage 239 is a passage for discharging the third permeated gas from the third separation membrane unit 225. The fifth discharge passage 239 joins the gas mixture supply passage 230 at the joining point 240 and can deliver the third permeated gas to the gas mixture supply passage 230.

In the gas separation system 200, the operating conditions of the separation membrane units, the type of the separation membrane used in each of the separation membrane units, the composition of the gas mixture, the composition of the second permeated gas, etc. were determined beforehand, and the energy and the membrane area of the separation membrane required to separate the gas mixture using the gas separation system 200 were calculated in each case. Symmetry, a process modeling software available from Schlumberger Ltd., was used for the calculations. As for Calculation Examples 20 to 25, the membrane area ratio of the separation membranes and the type of the separation membrane used in each of the first separation membrane unit 210 and the third separation membrane unit 225 were changed and the influences thereof were observed. Table 4 shows the results.

EP 4 194 076 A1

[Table 4]

| | | | Calculation Example | | | | | |
|---|---|---|---|---|---|---|---|---|
| | | | 20 | 21 | 22 | 23 | 24 | 25 |
| Set value | Area ratio of separation membranes (*1) | | 1/0.5 | 1/1 | 1/0.5 | 1/1 | 1/0.5 | 1/1 |
| | First separation membrane unit | Pressure in supply-side space (kPa) | 1000 | 1000 | 1000 | 1000 | 1000 | 1000 |
| | | Pressure in permeation-side space (kPa) | 101 | 101 | 101 | 101 | 101 | 101 |
| | Second separation membrane unit | Pressure in supply-side space (kPa) | 101 | 101 | 101 | 101 | 101 | 101 |
| | | Pressure in permeation-side space (kPa) | 1 | 1 | 1 | 1 | 1 | 1 |
| | Third separation membrane unit | Pressure in supply-side space (kPa) | 1000 | 1000 | 1000 | 1000 | 1000 | 1000 |
| | | Pressure in permeation-side space (kPa) | 101 | 101 | 101 | 101 | 101 | 101 |
| | Gas mixture | $CO_2$ content (wt%) | 10 | 10 | 10 | 10 | 10 | 10 |
| | | $CO_2$ weight (t) | 300 | 300 | 300 | 300 | 300 | 300 |
| | | $N_2$ content (wt%) | 90 | 90 | 90 | 90 | 90 | 90 |
| | | $N_2$ weight (t) | 2700 | 2700 | 2700 | 2700 | 2700 | 2700 |
| | Second permeated gas | $CO_2$ content (wt%) | 95 | 95 | 95 | 95 | 95 | 95 |
| | | $CO_2$ recovery rate (%) | 90 | 90 | 90 | 90 | 90 | 90 |
| | Separation membrane of first separation membrane unit | | A | A | A | A | C | C |
| | Separation membrane of second separation membrane unit | | A | A | C | C | A | A |
| | Separation membrane of third separation membrane unit | | A | A | A | A | C | C |

(continued)

| | | | Calculation Example | | | | | |
|---|---|---|---|---|---|---|---|---|
| | | | 20 | 21 | 22 | 23 | 24 | 25 |
| Calculated value | Third non-permeated gas | $N_2$ content (wt%) | 99.89 | 98.90 | 98.89 | 98.90 | 98.89 | 98.88 |
| | | $N_2$ recovery rate (%) | 99.47 | 99.48 | 99.47 | 99.48 | 99.47 | 99.49 |
| | Required membrane area of separation membrane ($m^2$) | First separation membrane unit | 698.07 | 512.55 | 698.07 | 512.56 | 232.68 | 169.88 |
| | | Third separation membrane unit | 349.03 | 512.55 | 34903 | 512.56 | 116.34 | 169.88 |
| | | Second separation membrane unit | 180.80 | 180.79 | 60.27 | 60.26 | 180.80 | 181.10 |
| | | Total value | 1227.90 | 1205.89 | 1107.37 | 1085.38 | 529.82 | 520.87 |
| | Required energy (MWh) | First separation membrane unit (pressurization) | 450.08 | 445.27 | 450.09 | 445.27 | 450.09 | 444.57 |
| | | Second separation membrane unit (decompression) | 50.15 | 50.17 | 50.15 | 50.17 | 50.15 | 50.14 |
| | | Total value | 500.24 | 495.45 | 500.25 | 495.45 | 500.25 | 494.71 |
| | MWh/t-$CO_2$(*2) | | 1.85 | 1.83 | 1.85 | 1.83 | 1.85 | 1.83 |
| | MWh/t-$N_2$(*3) | | 0.19 | 0.18 | 0.19 | 0.18 | 0.19 | 0.18 |

(1) (Area of first separation membrane)/(Area of third separation membrane)
(*2) Ratio of the total value (MWh) of the required energies with respect to the weight (t) of the recovered $CO_2$.
(*3) Ratio of the total value (MWh) of the required energies with respect to the weight (t) of the recovered $N_2$.

(Calculation Examples 26 to 28)

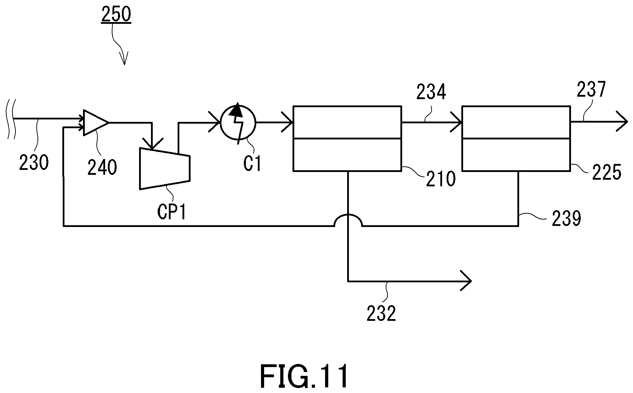

Next, the operation of the gas separation system disclosed in Patent Literature 2 was simulated. Specifically, it was assumed to operate a gas separation system 250 shown in FIG. 11 to separate the gas mixture. The gas separation system 250 has the same configuration as that of the gas separation system 200 in FIG. 10, except that it does not have the second separation membrane unit 220, the second discharge passage 236, and the third discharge passage 238.

In the gas separation system 250, the operating conditions of the separation membrane units, the type of the separation membrane used in each of the separation membrane units, the composition of the gas mixture, the composition of the first permeated gas, etc. were determined beforehand, and the energy and the membrane area of the separation membrane required to separate the gas mixture using the gas separation system 250 were calculated in each case. Symmetry, a process modeling software available from Schlumberger Ltd., was used for the calculations. As for Calculation Examples 26 to 28, the type of the separation membrane used was changed and the influences thereof were observed. Table 5 shows the results.

Table 5

| | | | Calculation Example | | |
|---|---|---|---|---|---|
| | | | 26 | 27 | 28 |
| Set value | First separation membrane unit | Pressure in supply-side space (kPa) | 1000 | 1000 | 1000 |
| | | Pressure in permeation-side space (kPa) | 101 | 101 | 101 |
| | Third separation membrane unit | Pressure in supply-side space (kPa) | 1000 | 1000 | 1000 |
| | | Pressure in permeation-side space (kPa) | 101 | 101 | 101 |
| | Gas mixture | $CO_2$ content (wt%) | 10 | 10 | 10 |
| | | $CO_2$ weight (t) | 300 | 300 | 300 |
| | | $N_2$ content (wt%) | 90 | 90 | 90 |
| | | $N_2$ weight (t) | 2700 | 2700 | 2700 |
| | First permeated gas | $CO_2$ content (wt%) | 95 | 95 | 95 |
| | | $CO_2$ recovery rate (%) | 90 | 90 | 90 |
| | Separation membrane of first separation membrane unit | | A | C | A |
| | Separation membrane of third separation membrane unit | | A | A | C |
| Calculated value | Third non-permeated gas | $N_2$ content (wt%) | 98.89 | 98.89 | 98.89 |
| | | $N_2$ recovery rate (%) | 99.47 | 99.47 | 99.47 |
| | Required membrane area of separation membrane ($m^2$) | First separation membrane unit | 20.21 | 6.74 | 20.21 |
| | | Third separation membrane unit | 1419.16 | 1419.16 | 473.03 |
| | | Total value | 1439.37 | 1425.90 | 493.24 |
| | Required energy (MWh) | | 642.39 | 642.40 | 642.39 |
| | MWh/t-$CO_2$ (*1) | | 2.38 | 2.38 | 2.38 |
| | MWh/t-$N_2$ (*2) | | 0.24 | 0.24 | 0.24 |

(*1) Ratio of the total value (MWh) of the required energies with respect to the weight (t) of the recovered $CO_2$.
(*2) Ratio of the total value (MWh) of the required energies with respect to the weight (t) of the recovered $N_2$.

As can be seen from Tables 2 to 5, in the gas separation system of the present embodiment having a configuration that allows the permeation-side space of each of the first separation membrane unit and the second separation membrane unit to be decompressed, the energy required to separate the gas mixture can be more reduced than in the conventional gas separation systems 200 and 250. Especially, as can be seen from Calculation Examples 1 to 10, etc., by pressurizing the inside of the supply-side space of the first separation membrane unit in the range not exceeding 700 kPa, it is also possible to reduce the required membrane area of the separation membrane while reducing the energy required to separate the gas mixture in the gas separation system of the present embodiment.

(Calculation Examples 29 to 39)

In the same manner as Calculation Examples 1 to 19, the operation of the gas separation system shown in FIG. 1 was simulated. As for Calculation Examples 29 to 39, the composition of the second permeated gas and the composition of the gas mixture were changed and the influences thereof were observed. Table 6 shows the results.

[Table 6]

| | | | Calculation Example | | | | | | | | | | |
|---|---|---|---|---|---|---|---|---|---|---|---|---|---|
| | | | 29 | 30 | 31 | 32 | 33 | 34 | 35 | 36 | 37 | 38 | 39 |
| Set value | First separation membrane unit | Pressure in supply-side space (kPa) | 101 | 101 | 101 | 101 | 101 | 200 | 200 | 200 | 400 | 400 | 400 |
| | | Pressure in permeation-side space (kPa) | 1 | 1 | 1 | 1 | 1 | 1 | 1 | 1 | 1 | 1 | 1 |
| | Second separation membrane unit | Pressure in supply-side space (kPa) | 101 | 101 | 101 | 101 | 101 | 101 | 101 | 101 | 101 | 101 | 101 |
| | | Pressure in permeation-side space (kPa) | 1 | 1 | 1 | 1 | 1 | 1 | 1 | 1 | 1 | 1 | 1 |
| | Gas mixture | $CO_2$ content (wt%) | 10 | 10 | 5 | 15 | 20 | 5 | 15 | 20 | 5 | 15 | 20 |
| | | $CO_2$ weight (t) | 300 | 300 | 300 | 300 | 300 | 300 | 300 | 300 | 300 | 300 | 300 |
| | | $N_2$ content (wt%) | 90 | 90 | 95 | 85 | 80 | 95 | 85 | 80 | 95 | 85 | 80 |
| | | $N_2$ weight (t) | 2700 | 2700 | 5700 | 1700 | 1200 | 5700 | 1700 | 1200 | 5700 | 1700 | 1200 |
| | Second permeated gas | $CO_2$ content (wt%) | 90 | 85 | 95 | 95 | 95 | 95 | 95 | 95 | 95 | 95 | 95 |
| | | $CO_2$ recovery rate (%) | 90 | 90 | 90 | 90 | 90 | 90 | 90 | 90 | 90 | 90 | 90 |
| | Separation membrane of first separation membrane unit | | C | C | A | A | A | A | A | A | A | A | A |
| | Separation membrane of second separation membrane unit | | A | A | A | A | A | A | A | A | A | A | A |

(continued)

| | | | Calculation Example | | | | | | | | | | |
|---|---|---|---|---|---|---|---|---|---|---|---|---|---|
| | | | 29 | 30 | 31 | 32 | 33 | 34 | 35 | 36 | 37 | 38 | 39 |
| Calculated value | First non-permeated gas | $N_2$ content (wt%) | 98.89 | 98.88 | 99.48 | 98.25 | 97.53 | 99.47 | 98.25 | 97.53 | 99.47 | 98.25 | 97.53 |
| | | $N_2$ recovery rate (%) | 98.90 | 98.15 | 99.75 | 99.16 | 98.82 | 99.75 | 99.16 | 98.81 | 99.75 | 99.16 | 98.81 |
| | Required membrane area of separation membrane ($m^2$) | First separation membrane unit | 687.38 | 680.23 | 5438.57 | 1281.74 | 888.55 | 2382.19 | 595.65 | 418.44 | 1101.69 | 285.01 | 201.71 |
| | | Second separation membrane unit | 332.54 | 501.76 | 180.89 | 181.00 | 180.70 | 180.79 | 180.94 | 181.11 | 181.01 | 180.95 | 180.92 |
| | | Total value | 101992 | 1181.98 | 5619.45 | 1462.74 | 1069.25 | 2562.98 | 776.59 | 599.55 | 1282.70 | 465.96 | 382.63 |
| | Required energy (MWh) | First separation membrane unit (pressurization) | - | - | - | - | - | 169.79 | 52.46 | 38.27 | 377.05 | 116.78 | 85.15 |
| | | First separation membrane unit (decompression) | 112.19 | 111.20 | 253.69 | 86.74 | 73.16 | 223.99 | 83.21 | 71.20 | 209.68 | 81.53 | 70.28 |
| | | Second separation membrane unit | 55.01 | 60.45 | 50.15 | 50.15 | 50.15 | 50.14 | 50.15 | 50.16 | 50.15 | 50.15 | 50.15 |
| | | Total value | 167.19 | 171.65 | 303.84 | 136.89 | 123.31 | 443.93 | 185.81 | 159.63 | 636.89 | 248.46 | 205.58 |
| | MWh/t-$CO_2$ (*1) | | 0.62 | 0.64 | 1.13 | 0.51 | 0.46 | 1.64 | 0.69 | 0.59 | 2.36 | 0.92 | 0.76 |
| | MWh/t-$N_2$ (*2) | | 0.06 | 0.06 | 0.05 | 0.08 | 0.10 | 0.08 | 0.11 | 0.13 | 0.11 | 0.15 | 0.17 |

(*1) Ratio of the total value (MWh) of the required energies with respect to the weight (t) of the recovered $CO_2$.
(*2) Ratio of the total value (MWh) of the required energies with respect to the weight (t) of the recovered $N_2$.

(Calculation Examples 40 to 45)

In the same manner as Calculation Examples 20 to 25, the operation of the gas separation system 200 shown in FIG. 10 was simulated. As for Calculation Examples 40 to 45, the composition of the second permeated gas and the composition of the gas mixture were changed and the influences thereof were observed. Table 7 shows the results.

[Table 7]

| | | | Calculation Example | | | | | |
| --- | --- | --- | --- | --- | --- | --- | --- | --- |
| | | | 40 | 41 | 42 | 43 | 44 | 45 |
| Set value | | Area ratio of separation membranes (*1) | 1/0.5 | 1/1 | 1/0.5 | 1/1 | 1/1 | 1/1 |
| | First separation membrane unit | Pressure in supply-side space (kPa) | 1000 | 1000 | 1000 | 1000 | 1000 | 1000 |
| | | Pressure in permeation-side space (kPa) | 101 | 101 | 101 | 101 | 101 | 101 |
| | Second separation membrane unit | Pressure in supply-side space (kPa) | 101 | 101 | 101 | 101 | 101 | 101 |
| | | Pressure in permeation-side space (kPa) | 1 | 1 | 1 | 1 | 1 | 1 |
| | Third separation membrane unit | Pressure in supply-side space (kPa) | 1000 | 1000 | 1000 | 1000 | 1000 | 1000 |
| | | Pressure in permeation-side space (kPa) | 101 | 101 | 101 | 101 | 101 | 101 |
| | Gas mixture | $CO_2$ content (wt%) | 10 | 10 | 10 | 10 | 5 | 15 |
| | | $CO_2$ weight (t) | 300 | 300 | 300 | 300 | 300 | 300 |
| | | $N_2$ content (wt%) | 90 | 90 | 90 | 90 | 95 | 85 |
| | | $N_2$ weight (t) | 2700 | 2700 | 2700 | 2700 | 5700 | 1700 |
| | Second permeated gas | $CO_2$ content (wt%) | 90 | 90 | 85 | 85 | 95 | 95 |
| | | $CO_2$ recovery rate (%) | 90 | 90 | 90 | 90 | 90 | 90 |
| | Separation membrane of first separation membrane unit | | C | C | C | C | A | A |
| | Separation membrane of second separation membrane unit | | A | A | A | A | A | A |
| | Separation membrane of third separation membrane unit | | C | C | C | C | A | A |

(continued)

| | | | Calculation Example | | | | | |
|---|---|---|---|---|---|---|---|---|
| | | | 40 | 41 | 42 | 43 | 44 | 45 |
| Calculated value | Third non-permeated gas | $N_2$ content (wt%) | 98.89 | 98.89 | 98.91 | 98.88 | 99.47 | 98.24 |
| | | $N_2$ recovery rate (%) | 98.84 | 98.89 | 98.22 | 98.24 | 99.75 | 99.18 |
| | Required membrane area of separation membrane ($m^2$) | First separation membrane unit | 205.10 | 155.76 | 198.92 | 151.42 | 1471.21 | 269.37 |
| | | Third separation membrane unit | 102.55 | 155.76 | 99.46 | 151.42 | 1471.21 | 269.37 |
| | | Second separation membrane unit | 332.55 | 332.31 | 503.39 | 501.81 | 181.12 | 180.74 |
| | | Total value | 640.20 | 643.84 | 801.77 | 804.64 | 3123.54 | 719.48 |
| | Required energy (MWh) | First separation membrane unit (pressurization) | 423.98 | 426.24 | 416.86 | 420.11 | 1019.51 | 273.28 |
| | | Second separation membrane unit (decompression) | 54.98 | 55.02 | 60.65 | 60.46 | 50.16 | 50.14 |
| | | Total value | 478.97 | 481.26 | 477.51 | 480.57 | 1069.67 | 323.42 |
| | MWh/t-$CO_2$ (*2) | | 1.77 | 1.78 | 1.76 | 1.78 | 3.96 | 1.20 |
| | MWh/t-$N_2$ (*3) | | 0.18 | 0.18 | 0.18 | 0.18 | 0.19 | 0.19 |
| (*1) (Area of first separation membrane)/(Area of third separation membrane) (*2) Ratio of the total value (MWh) of the required energies with respect to the weight (t) of the recovered $CO_2$. (*3) Ratio of the total value (MWh) of the required energies with respect to the weight (t) of the recovered $N_2$. | | | | | | | | |

(Calculation Examples 46 to 50)

In the same manner as Calculation Examples 26 to 28, the operation of the gas separation system 250 shown in FIG. 11 was simulated. As for Calculation Examples 46 to 50, the composition of the first permeated gas and the composition of the gas mixture were changed and the influences thereof were observed. Table 8 shows the results.

[Table 8]

| | | | Calculation Example | | | | |
|---|---|---|---|---|---|---|---|
| | | | 46 | 47 | 48 | 49 | 50 |
| Set value | First separation membrane unit | Pressure in supply-side space (kPa) | 1000 | 1000 | 1000 | 1000 | 1000 |
| | | Pressure in permeation-side space (kPa) | 101 | 101 | 101 | 101 | 101 |
| | Third separation membrane unit | Pressure in supply-side space (kPa) | 1000 | 1000 | 1000 | 1000 | 1000 |
| | | Pressure in permeation-side space (kPa) | 101 | 101 | 101 | 101 | 101 |
| | Gas mixture | $CO_2$ content (wt%) | 10 | 10 | 5 | 15 | 20 |
| | | $CO_2$ weight (t) | 300 | 300 | 300 | 300 | 300 |
| | | $N_2$ content (wt%) | 90 | 90 | 95 | 85 | 80 |
| | | $N_2$ weight (t) | 2700 | 2700 | 5700 | 1700 | 1200 |
| | First permeated gas | $CO_2$ content (wt%) | 90 | 85 | 95 | 95 | 95 |
| | | $CO_2$ recovery rate (%) | 90 | 90 | 90 | 90 | 90 |
| | Separation membrane of first separation membrane unit | | C | C | A | A | A |
| | Separation membrane of third separation membrane unit | | A | A | A | A | A |
| Calculated value | Third non-permeated gas | $N_2$ content (wt%) | 98.87 | 98.88 | 99.51 | 98.24 | 97.53 |
| | | $N_2$ recovery rate (%) | 98.91 | 98.24 | 99.75 | 99.18 | 98.83 |
| | Required membrane area of separation membrane ($m^2$) | First separation membrane unit | 12.37 | 18.67 | 20.21 | 20.20 | 20.20 |
| | | Third separation membrane unit | 1263.47 | 1176.62 | 4120.42 | 719.99 | 423.73 |
| | | Total value | 1275.84 | 1195.29 | 4140.63 | 740.19 | 443.93 |
| | Required energy (MWh) | | 545.58 | 508.33 | 1511.42 | 382.50 | 260.37 |
| | MWh/t-$CO_2$ (*1) | | 2.02 | 1.88 | 5.60 | 1.42 | 0.96 |
| | MWh/t-$N_2$ (*2) | | 0.20 | 0.19 | 0.27 | 0.23 | 0.22 |

(*1) Ratio of the total value (MWh) of the required energies with respect to the weight (t) of the recovered $CO_2$.
(*2) Ratio of the total value (MWh) of the required energies with respect to the weight (t) of the recovered $N_2$.

In gas separation systems, energy required to separate a gas mixture depends greatly on the composition of the permeated gas and the composition of the gas mixture, especially the composition of the gas mixture. When comparisons are made among Calculation Examples in Tables 6 to 8 under the conditions that they are the same in terms of the compositions of the gases mentioned above, it is found that the energy required to separate the gas mixture can be more reduced in the gas separation system of the present embodiment having a configuration that allows the permeation-side space of each of the first separation membrane unit and the second separation membrane unit to be decompressed than in the conventional gas separation systems 200 and 210.

(Calculation Examples 51 to 58)

In the same manner as Calculation Example 1, the operation of the gas separation system shown in FIG. 1 was simulated. As for Calculation Examples 51 to 58, the pressure in the permeation-side space of the first separation membrane unit or the pressure in the permeation-side space of the second separation membrane unit was changed from those of Calculation Example 1 and the influences thereof were observed. Table 9 shows the results.

[Table 9]

| | | | Calculation Example | | | | | | | | |
|---|---|---|---|---|---|---|---|---|---|---|---|
| | | | 1 | 51 | 52 | 53 | 54 | 55 | 56 | 57 | 58 |
| Set value | First separation membrane unit | Pressure in supply-side space (kPa) | 101 | 101 | 101 | 101 | 101 | 101 | 101 | 101 | 101 |
| | | Pressure in permeation-side space (kPa) | 1 | 1 | 1 | 1 | 1 | 2 | 2 | 2 | 2 |
| | Second separation membrane unit | Pressure in supply-side space (kPa) | 101 | 101 | 101 | 101 | 101 | 101 | 101 | 101 | 101 |
| | | Pressure in permeation-side space (kPa) | 1 | 2 | 5 | 10 | 15 | 2 | 4 | 10 | 15 |
| | Gas mixture | $CO_2$ content (wt%) | 10 | 10 | 10 | 10 | 10 | 10 | 10 | 10 | 10 |
| | | $CO_2$ weight (t) | 300 | 300 | 300 | 300 | 300 | 300 | 300 | 300 | 300 |
| | | $N_2$ content (wt%) | 90 | 90 | 90 | 90 | 90 | 90 | 90 | 90 | 90 |
| | | $N_2$ weight (t) | 2700 | 2700 | 2700 | 2700 | 2700 | 2700 | 2700 | 2700 | 2700 |
| | | $0.55e^{0.0536x}$ | 0.94 | 0.94 | 0.94 | 0.94 | 0.94 | 0.94 | 0.94 | 0.94 | 0.94 |
| | | $0.4116e^{0.0536x}$ | 0.70 | 0.70 | 0.70 | 0.70 | 0.70 | 0.70 | 0.70 | 0.70 | 0.70 |
| | | $0.2e^{0.0536x}$ | 0.34 | 0.34 | 0.34 | 0.34 | 0.34 | 0.34 | 0.34 | 0.34 | 0.34 |
| | First permeated gas | $CO_2$ content (wt%) | 56.4 | 57.94 | 58.53 | 59.6 | 60.79 | 54.27 | 54.81 | 56.55 | 58.1 |
| | | $0.55e^{0.0536x}$ | 11.3 | 12.3 | 12.7 | 13.4 | 14.3 | 10.1 | 10.4 | 11.4 | 12.4 |
| | | $0.4116e^{0.0536x}$ | 8.5 | 9.2 | 9.5 | 10.0 | 10.7 | 7.5 | 7.8 | 8.5 | 9.3 |
| | | $0.2e^{0.0536x}$ | 4.111 | 4.464 | 4.608 | 4.880 | 5.201 | 3.667 | 3.775 | 4.144 | 4.503 |
| | Second permeated gas | $CO_2$ content (wt%) | 95 | 95 | 95 | 95 | 95 | 95 | 95 | 95 | 95 |
| | | $CO_2$ recovery rate (%) | 90 | 90 | 90 | 90 | 90 | 90 | 90 | 90 | 90 |

(continued)

| | | | Calculation Example | | | | | | | | |
|---|---|---|---|---|---|---|---|---|---|---|---|
| | | | 1 | 51 | 52 | 53 | 54 | 55 | 56 | 57 | 58 |
| | Separation membrane of first separation membrane unit | | A | A | A | A | A | A | A | A | A |
| | Separation membrane of second separation membrane unit | | A | A | A | A | A | A | A | A | A |
| Calculated value | First non-permeated gas | $N_2$ content (wt%) | 98.90 | 98.89 | 98.89 | 98.9 | 98.9 | 98.9 | 98.9 | 98.9 | 98.9 |
| | | $N_2$ recovery rate (%) | 99.47 | 99.48 | 99.47 | 99.47 | 99.47 | 99.47 | 99.47 | 99.47 | 99.47 |
| | Required membrane area of separation membrane ($m^2$) | First separation membrane unit | 2147.95 | 2150.55 | 2182.97 | 2239.12 | 2305.94 | 2676.8 | 2705.11 | 2801.08 | 2878.39 |
| | | Second separation membrane unit | 180.93 | 182.97 | 188.58 | 199.18 | 210.67 | 183.39 | 186.97 | 199.18 | 210.67 |
| | | Total value | 2328.88 | 2333.52 | 2371.55 | 2438.3 | 2516.61 | 2860.19 | 2892.08 | 3000.26 | 3089.06 |
| | Required energy (MWh) | First separation membrane unit | 119.19 | 119.49 | 122.46 | 127.90 | 134.47 | 108.36 | 110.38 | 117.30 | 123.69 |
| | | Second separation membrane unit | 50.15 | 39.60 | 27.51 | 19.62 | 15.51 | 39.60 | 30.22 | 19.62 | 15.42 |
| | | Total value | 169.34 | 159.08 | 149.97 | 147.52 | 149.97 | 147.96 | 140.60 | 136.92 | 139.11 |
| | MWh/t-$CO_2$ (*1) | | 0.63 | 0.59 | 0.56 | 0.55 | 0.56 | 0.55 | 0.52 | 0.51 | 0.52 |
| | MWh/t-$N_2$ (*2) | | 0.06 | 0.06 | 0.06 | 0.05 | 0.06 | 0.06 | 0.05 | 0.05 | 0.05 |
| | Evaluation by whether relational expression (A) is satisfied in second step: ∘ satisfied; × not satisfied | | × | × | ○ | ○ | × | × | ○ | ○ | × |
| | Evaluation by whether relational expression (A) is satisfied in first step: ∘ satisfied; × not satisfied | | × | × | × | × | × | × | × | × | × |

(*1) Ratio of the total value (MWh) of the required energies with respect to the weight (t) of the recovered $CO_2$.
(*2) Ratio of the total value (MWh) of the required energies with respect to the weight (t) of the recovered $N_2$.

(Calculation Examples 59 to 72)

In Calculation Examples 59 to 72, the operation of the gas separation system shown in FIG. 1 was simulated in the same manner as Calculation Example 33. As for Calculation Examples 59 to 72, the pressure in the permeation-side space of the first separation membrane unit or the pressure in the permeation-side space of the second separation membrane unit was changed from those of Calculation Example 33 and the influences thereof were observed. Tables 10 and 11 show the results.

[Table 10]

| | | | Calculation Example | | | | | |
|---|---|---|---|---|---|---|---|---|
| | | | 33 | 59 | 60 | 61 | 62 | 63 |
| Set value | First separation membrane unit | Pressure in supply-side space (kPa) | 101 | 101 | 101 | 101 | 101 | 101 |
| | | Pressure in permeation-side space (kPa) | 1 | 1 | 1 | 1 | 1 | 1 |
| | Second separation membrane unit | Pressure in supply-side space (kPa) | 101 | 101 | 101 | 101 | 101 | 101 |
| | | Pressure in permeation-side space (kPa) | 1 | 2 | 5 | 10 | 20 | 30 |
| | Gas mixture | $CO_2$ content (wt%) | 20 | 20 | 20 | 20 | 20 | 20 |
| | | $CO_2$ weight (t) | 300 | 300 | 300 | 300 | 300 | 300 |
| | | $N_2$ content (wt%) | 80 | 80 | 80 | 80 | 80 | 80 |
| | | $N_2$ weight (t) | 1200 | 1200 | 1200 | 1200 | 1200 | 1200 |
| | | $0.55e^{0.0536x}$ | 1.61 | 1.61 | 1.61 | 1.61 | 1.61 | 1.61 |
| | | $0.4116e^{0.0536x}$ | 1.20 | 1.20 | 1.20 | 1.20 | 1.20 | 1.20 |
| | | $0.2e^{0.0536x}$ | 0.58 | 0.58 | 0.58 | 0.58 | 0.58 | 0.58 |
| | First permeated gas | $CO_2$ content (wt%) | 75.58 | 75.6 | 75.69 | 75.85 | 76.32 | 77 |
| | | $0.55e^{0.0536x}$ | 31.6 | 31.6 | 31.8 | 32.1 | 32.9 | 34.1 |
| | | $0.4116e^{0.0536x}$ | 23.7 | 23.7 | 23.8 | 24.0 | 24.6 | 25.5 |
| | | $0.2e^{0.0536x}$ | 11.492 | 11.504 | 11.560 | 11.660 | 11.957 | 12.401 |
| | Second permeated gas | $CO_2$ content (wt%) | 95 | 95 | 95 | 95 | 95 | 95 |
| | | $CO_2$ recovery rate (%) | 90 | 90 | 90 | 90 | 90 | 90 |
| | Separation membrane of first separation membrane unit | | A | A | A | A | A | A |
| | Separation membrane of second separation membrane unit | | A | A | A | A | A | A |

(continued)

| | | | Calculation Example | | | | | |
|---|---|---|---|---|---|---|---|---|
| | | | 33 | 59 | 60 | 61 | 62 | 63 |
| Calculated value | First non-permeated gas | $N_2$ content (wt%) | 97.53 | 97.54 | 97.54 | 97.54 | 97.54 | 97.54 |
| | | $N_2$ recovery rate (%) | 98.82 | 98.82 | 98.81 | 98.82 | 98.82 | 98.82 |
| | Required membrane area of separation membrane ($m^2$) | First separation membrane unit | 888.55 | 886.6 | 888.9 | 894.63 | 910.06 | 932.64 |
| | | Second separation membrane unit | 180.7 | 183.16 | 188.99 | 199.09 | 223.46 | 254.63 |
| | | Total value | 1069.25 | 1069.76 | 1077.89 | 1093.72 | 1133.52 | 1187.27 |
| | Required energy (MWh) | First separation membrane unit | 73.16 | 73.06 | 73.41 | 74.28 | 76.74 | 80.42 |
| | | Second separation membrane unit | 50.15 | 39.60 | 27.51 | 19.62 | 12.70 | 9.11 |
| | | Total value | 123.31 | 112.65 | 100.92 | 93.91 | 89.44 | 89.53 |
| | MWh/t-$CO_2$ (*1) | | 0.46 | 0.42 | 0.37 | 0.35 | 0.33 | 0.33 |
| | MWh/t-$N_2$ (*2) | | 0.1 | 0.09 | 0.09 | 0.08 | 0.08 | 0.08 |
| | Evaluation by whether relational expression (A) is satisfied in second step: ∘ satisfied; × not satisfied | | × | × | × | × | ○ | ○ |
| | Evaluation by whether relational expression (A) is satisfied in first step: ∘ satisfied; × not satisfied | | ○ | ○ | ○ | ○ | ○ | ○ |

(*1) Ratio of the total value (MWh) of the required energies with respect to the weight (t) of the recovered $CO_2$.
(*2) Ratio of the total value (MWh) of the required energies with respect to the weight (t) of the recovered $N_2$.

[Table 11]

(continued)

| | Calculation Example | | | | | | | | |
|---|---|---|---|---|---|---|---|---|---|
| | 64 | 65 | 66 | 67 | 68 | 69 | 70 | 71 | 72 |

(continued)

| | | | Calculation Example | | | | | | | | |
|---|---|---|---|---|---|---|---|---|---|---|---|
| | | | 64 | 65 | 66 | 67 | 68 | 69 | 70 | 71 | 72 |
| Set value | First separation membrane unit | Pressure in supply-side space (kPa) | 101 | 101 | 101 | 101 | 101 | 101 | 101 | 101 | 101 |
| | | Pressure in permeation-side space (kPa) | 2 | 2 | 2 | 2 | 2 | 5 | 5 | 5 | 5 |
| | Second separation membrane unit | Pressure in supply-side space (kPa) | 101 | 101 | 101 | 101 | 101 | 101 | 101 | 101 | 101 |
| | | Pressure in permeation-side space (kPa) | 2 | 5 | 10 | 20 | 30 | 5 | 10 | 20 | 30 |
| | Gas mixture | $CO_2$ content (wt%) | 20 | 20 | 20 | 20 | 20 | 20 | 20 | 20 | 20 |
| | | $CO_2$ weight (t) | 300 | 300 | 300 | 300 | 300 | 300 | 300 | 300 | 300 |
| | | $N_2$ content (wt%) | 80 | 80 | 80 | 80 | 80 | 80 | 80 | 80 | 80 |
| | | $N_2$ weight (t) | 1200 | 1200 | 1200 | 1200 | 1200 | 1200 | 1200 | 1200 | 1200 |
| | | $0.55e^{0.0536x}$ | 1.61 | 1.61 | 1.61 | 1.61 | 1.61 | 1.61 | 1.61 | 1.61 | 1.61 |
| | | $0.4116e^{0.0536x}$ | 1.20 | 1.20 | 1.20 | 1.20 | 1.20 | 1.20 | 1.20 | 1.20 | 1.20 |
| | | $0.2e^{0.0536x}$ | 0.58 | 0.58 | 0.58 | 0.58 | 0.58 | 0.58 | 0.58 | 0.58 | 0.58 |
| | First permeated gas | $CO_2$ content (wt%) | 72.89 | 73.01 | 73.26 | 74 | 74.93 | 64.76 | 65.44 | 67.11 | 69.18 |
| | | $0.55e^{0.0536x}$ | 27.4 | 27.5 | 27.9 | 29.0 | 30.5 | 17.7 | 18.4 | 20.1 | 22.4 |
| | | $0.4116e^{0.0536x}$ | 20.5 | 20.6 | 20.9 | 21.7 | 22.8 | 13.2 | 13.7 | 15.0 | 16.8 |
| | | $0.2e^{0.0536x}$ | 9.949 | 10.013 | 10.148 | 10.559 | 11.099 | 6.435 | 6.674 | 7.298 | 8.155 |
| | Second permeated gas | $CO_2$ content (wt%) | 95 | 95 | 95 | 95 | 95 | 95 | 95 | 95 | 95 |
| | | $CO_2$ recovery rate (%) | 90 | 90 | 90 | 90 | 90 | 90 | 90 | 90 | 90 |
| | Separation membrane of first separation membrane unit | | A | A | A | A | A | A | A | A | A |
| | Separation membrane of second separation membrane unit | | A | A | A | A | A | A | A | A | A |

| | | | Calculation Example | | | | | | | | |
|---|---|---|---|---|---|---|---|---|---|---|---|
| | | | 64 | 65 | 66 | 67 | 68 | 69 | 70 | 71 | 72 |
| Calculated value | First non-permeated gas | $N_2$ content (wt%) | 97.53 | 97.54 | 97.54 | 97.54 | 97.52 | 97.53 | 97.53 | 97.54 | 97.53 |
| | | $N_2$ recovery rate (%) | 98.81 | 98.81 | 98.81 | 98.82 | 98.82 | 98.82 | 98.82 | 98.82 | 98.82 |
| | Required membrane area of separation membrane ($m^2$) | First separation membrane unit | 1030.23 | 1034.36 | 1042.34 | 1060.26 | 1091.74 | 1622.03 | 1646.29 | 1700.66 | 1767.36 |
| | | Second separation membrane unit | 183.14 | 188.78 | 199.09 | 223.59 | 254.78 | 188.69 | 199.04 | 223.29 | 254.73 |
| | | Total value | 1213.37 | 1223.14 | 1241.43 | 1283.85 | 1346.52 | 1810.72 | 1845.33 | 1923.95 | 2022.09 |
| | Required energy (MWh) | First separation membrane unit | 60.79 | 61.23 | 62.20 | 64.56 | 68.42 | 52.30 | 53.87 | 57.73 | 62.98 |
| | | Second separation membrane unit | 39.60 | 27.51 | 19.62 | 12.70 | 9.11 | 27.51 | 19.62 | 12.70 | 9.11 |
| | | Total value | 100.39 | 88.74 | 81.82 | 77.26 | 77.53 | 79.80 | 73.50 | 70.43 | 72.09 |
| | MWh/t-$CO_2$ (*1) | | 0.37 | 0.33 | 0.3 | 0.29 | 0.29 | 0.3 | 0.27 | 0.26 | 0.27 |
| | MWh/t-$N_2$ (*2) | | 0.08 | 0.07 | 0.07 | 0.07 | 0.07 | 0.07 | 0.06 | 0.06 | 0.06 |
| | Evaluation by whether relational expression (A) is satisfied in second step: ○ satisfied; × not satisfied | | × | × | × | ○ | ○ | × | ○ | ○ | × |
| | Evaluation by whether relational expression (A) is satisfied in first step: ○ satisfied; × not satisfied | | × | × | × | × | × | × | × | × | × |

(*1) Ratio of the total value (MWh) of the required energies with respect to the weight (t) of the recovered $CO_2$.
(*2) Ratio of the total value (MWh) of the required energies with respect to the weight (t) of the recovered $N_2$.

EP 4 194 076 A1

As can be seen from Tables 9 to 11, by properly setting the pressure in the permeation-side space of the first separation membrane unit or the pressure in the permeation-side space of the second separation membrane unit, it is possible to reduce the required energy without significantly increasing the membrane area of the separation membrane required to separate the gas mixture. It can be said that this effect is remarkable in Calculation Examples in which the pressure P in the permeation-side space of the separation membrane unit satisfies the relational expression (A) mentioned above.

(Calculation Examples 73 to 77)

In Calculation Example 73, the operation of the gas separation system shown in FIG. 1 was simulated in the same manner as Calculation Example 1. Furthermore, in Calculation Examples 74 to 77, the operation of the gas separation system shown in FIG. 8 was simulated. The simulations of Calculation Examples 74 to 77 were performed by the same method as that used for Calculation Example 1, etc. In Calculation Examples 74 to 77, the composition of the third permeated gas was determined beforehand instead of the composition of the second permeated gas. As for Calculation Examples 73 to 77, the composition of the gas mixture was changed and the influences thereof were observed. Table 12 shows the results.

[Table 12]

| | | | Calculation Example | | | | |
|---|---|---|---|---|---|---|---|
| | | | 73 | 74 | 75 | 76 | 77 |
| Set value | First separation membrane unit | Pressure in supply-side space (kPa) | 101 | 101 | 101 | 101 | 101 |
| | | Pressure in permeation-side space (kPa) | 1 | 1 | 1 | 1 | 1 |
| | Second separation membrane unit | Pressure in supply-side space (kPa) | 101 | 101 | 101 | 101 | 101 |
| | | Pressure in permeation-side space (kPa) | 1 | 1 | 1 | 1 | 1 |
| | Third separation membrane unit | Pressure in supply-side space (kPa) | - | 101 | 101 | 101 | 101 |
| | | Pressure in permeation-side space (kPa) | - | 1 | 1 | 1 | 2 |
| | Gas mixture | $CO_2$ content (wt%) | 1 | 0.4 | 0.2 | 0.1 | 0.1 |
| | | $CO_2$ weight (t) | 300 | 300 | 300 | 300 | 300 |
| | | $N_2$ content (wt%) | 99 | 99.6 | 99.8 | 99.9 | 99.9 |
| | | $N_2$ weight (t) | 29700 | 74700 | 149700 | 299700 | 299700 |
| | Second permeated gas or third permeated gas | $CO_2$ content (wt%) | 95 | 95 | 95 | 95 | 95 |
| | | $CO_2$ recovery rate (%) | 90 | 90 | 90 | 90 | 90 |
| | Separation membrane of first separation membrane unit | | A | A | A | A | A |
| | Separation membrane of second separation membrane unit | | A | A | A | A | A |
| | Separation membrane of third separation membrane unit | | - | A | A | A | A |

(continued)

| | | | Calculation Example | | | | |
|---|---|---|---|---|---|---|---|
| | | | 73 | 74 | 75 | 76 | 77 |
| Calculated value | First non-permeated gas | $N_2$ content (wt%) | 99.9 | 99.96 | 99.98 | 99.99 | 99.99 |
| | | $N_2$ recovery rate (%) | 99.95 | 99.98 | 99.98 | 99.99 | 99.99 |
| | Required membrane area of separation membrane ($m^2$) | First separation membrane unit | 49176.58 | 63959.16 | 131000 | 270000 | 270000 |
| | | Second separation membrane unit | 181.34 | 8947.53 | 19092.86 | 40017.15 | 39584.27 |
| | | Third separation membrane unit | - | 181 | 183 | 181 | 183 |
| | | Total value | 49357.92 | 73087.69 | 150275.9 | 310198.2 | 309767.3 |
| | Required energy (MWh) | First separation membrane unit | 2095.13 | 2232.75 | 4530.32 | 9315.73 | 9293.66 |
| | | Second separation membrane unit | 50.11 | 399.63 | 824.75 | 1708.90 | 1702.07 |
| | | Third separation membrane unit | - | 50.17 | 50.21 | 50.15 | 39.57882 |
| | | Total value | 2145.24 | 2682.55 | 5405.29 | 11074.78 | 11035.31 |
| | MWh/t-$CO_2$ (*1) | | 7.95 | 9.94 | 20 | 41 | 40.9 |
| | MWh/t-$N_2$ (*2) | | 0.07 | 0.04 | 0.04 | 0.04 | 0.04 |

(*1) Ratio of the total value (MWh) of the required energies with respect to the weight (t) of the recovered $CO_2$.
(*2) Ratio of the total value (MWh) of the required energies with respect to the weight (t) of the recovered $N_2$.

As can be seen from Table 12, the gas separation system of the present embodiment can separate gas mixtures having a very low content of carbon dioxide.

INDUSTRIAL APPLICABILITY

The gas separation system of the present embodiment is suitable for separating a gas mixture, especially an emission gas containing carbon dioxide and nitrogen.

**Claims**

1.   A gas separation system comprising:

a first separation membrane unit that separates a gas mixture containing carbon dioxide and nitrogen into a first permeated gas and a first non-permeated gas;
a second separation membrane unit that separates the first permeated gas into a second permeated gas and a second non-permeated gas;
a first decompression device that decompresses a permeation-side space of the first separation membrane unit; and
a second decompression device that decompresses a permeation-side space of the second separation membrane unit.

2. The gas separation system according to claim 1, being a continuous-type system.

3. The gas separation system according to claim 1 or 2, wherein at least one of the following holds: (I) the gas mixture is separated into the first permeated gas and the first non-permeated gas while the permeation-side space of the first separation membrane unit is being decompressed by the first decompression device; and (II) the first permeated gas is separated into the second permeated gas and the second non-permeated gas while the permeation-side space of the second separation membrane unit is being decompressed by the second decompression device.

4. The gas separation system according to any one of claims 1 to 3, wherein

   the gas mixture contains a main component gas and a sub-component gas,
   the first permeated gas has a content of the sub-component gas higher than that in the gas mixture, and
   the first non-permeated gas has a content of the sub-component gas lower than that in the gas mixture.

5. The gas separation system according to claim 4, wherein

   the second permeated gas has a content of the sub-component gas higher than that in the first permeated gas, and
   the second non-permeated gas has a content of the sub-component gas lower than that in the first permeated gas.

6. The gas separation system according to claim 4 or 5, wherein the gas mixture contains nitrogen as the main component gas and carbon dioxide as the sub-component gas.

7. The gas separation system according to any one of claims 1 to 6, wherein a content $C_{CO2}$ (wt%) of carbon dioxide in the gas mixture and a content $C_{N2}$ (wt%) of nitrogen in the gas mixture satisfy relational expression (1) below.

$$C_{CO2} < C_{N2}/4 \quad (1)$$

8. The gas separation system according to any one of claims 1 to 7, wherein a content of carbon dioxide in the gas mixture is 5 wt% or more.

9. The gas separation system according to any one of claims 1 to 8, wherein

   a content of carbon dioxide in the second permeated gas is 80 wt% or more, and
   a content of nitrogen in the first non-permeated gas is 95 wt% or more.

10. The gas separation system according to any one of claims 1 to 9, further comprising a permeated gas supply passage connected to the first separation membrane unit and the second separation membrane unit and configured to supply the first permeated gas to the second separation membrane unit, wherein
the first decompression device is provided to the permeated gas supply passage.

11. The gas separation system according to claim 10, wherein the permeated gas supply passage is provided with no collector that collects the first permeated gas.

12. The gas separation system according to claim 10 or 11, wherein the permeated gas supply passage is composed only of the first decompression device and a pipe.

13. The gas separation system according to any one of claims 1 to 12, comprising a plurality of the first separation membrane units.

14. The gas separation system according to claim 13, wherein the first decompression device is shared by the first separation membrane units.

**15.** The gas separation system according to any one of claims 1 to 14, further comprising:

a gas mixture supply passage connected to the first separation membrane unit and configured to supply the gas mixture to the first separation membrane unit; and
a discharge passage connected to the second separation membrane unit and configured to discharge the second non-permeated gas from the second separation membrane unit, wherein
the discharge passage joins the gas mixture supply passage at a joining point.

**16.** The gas separation system according to any one of claims 1 to 15, wherein

the first separation membrane unit has a first separation membrane that separates the gas mixture,
the second separation membrane unit has a second separation membrane that separates the first permeated gas, and
at least one selected from the group consisting of the first separation membrane and the second separation membrane includes a polyether block amide resin or an ionic liquid.

**17.** A method for separating a gas mixture, comprising:

a first separation step of supplying a gas mixture containing carbon dioxide and nitrogen to a first separation membrane unit and separating the gas mixture into a first permeated gas and a first non-permeated gas by decompressing a permeation-side space of the first separation membrane unit; and
a second separation step of supplying the first permeated gas to a second separation membrane unit and separating the first permeated gas into a second permeated gas and a second non-permeated gas by decompressing a permeation-side space of the second separation membrane unit.

**18.** The separation method according to claim 17, wherein in the first separation step, a pressure difference between a supply-side space and the permeation-side space of the first separation membrane unit is adjusted to 400 kPa or less.

**19.** The separation method according to claim 17 or 18, wherein at least one of the following holds: (i) In the first separation step, when a pressure in the permeation-side space of the first separation membrane unit is denoted as P (kPa) and a content of the carbon dioxide in the gas mixture is denoted as x (wt%), relational expression (A) below is satisfied; and (ii) In the second separation step, when a pressure in the permeation-side space of the second separation membrane unit is denoted as P (kPa) and a content of the carbon dioxide in the first permeated gas is denoted as x (wt%), the relational expression (A) is satisfied.

$$0.2e^{0.0536x} \leq P \leq 0.55e^{0.0536x} \quad (A)$$

**20.** The separation method according to any one of claims 17 to 19, wherein the pressure in the permeation-side space of the second separation membrane unit in the second separation step is equal to or higher than the pressure in the permeation-side space of the first separation membrane unit in the first separation step.

**21.** The separation method according to any one of claims 17 to 20, wherein the gas mixture is an emission gas generated by burning a fuel.

FIG.1

10

13a    70    13    13b    81

11

14a

80    14

12

FIG.2

FIG.3

FIG.4

FIG.5

15

81

80

16

17

70

18

19

11

FIG.6

FIG.7

FIG.8

25

28a    90    28    28b    96

26

29a    95    29

27

FIG.9

FIG.10

250

234    237

230    240    C1    210    225

CP1    239

232

FIG.11

**INTERNATIONAL SEARCH REPORT**

International application No.

PCT/JP2021/027422

A. CLASSIFICATION OF SUBJECT MATTER
Int.Cl. B01D53/22(2006.01)i, B01D69/00(2006.01)i, B01D71/52(2006.01)i,
B01D71/56(2006.01)i
FI: B01D53/22, B01D69/00500, B01D71/52, B01D71/56
According to International Patent Classification (IPC) or to both national classification and IPC

B. FIELDS SEARCHED

Minimum documentation searched (classification system followed by classification symbols)
Int.Cl. B01D53/22, B01D61/00-71/82

Documentation searched other than minimum documentation to the extent that such documents are included in the fields searched
Published examined utility model applications of Japan　　　1922-1996
Published unexamined utility model applications of Japan　　1971-2021
Registered utility model specifications of Japan　　　　　　1996-2021
Published registered utility model applications of Japan　　1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2020-501884 A (MEMBRANE TECHNOLOGY AND RESEARCH INC.) 23 January 2020 (2020-01-23), paragraphs [0018]-[0020], [0039]-[0041], fig. 2, 7 | 1-21<br>12, 15 |
| X<br>Y | JP 3-267109 A (UBE INDUSTRIES, LTD.) 28 November 1991 (1991-11-28), claims, page 2, upper right column, line 5 to page 6, upper left column, line 10, fig. 1, 2 | 1-11, 13-14,<br>16-21<br>12, 15 |
| A | JP 3-101807 A (AG TECHNOL CORP.) 26 April 1991 (1991-04-26) | 1-21 |

☐ Further documents are listed in the continuation of Box C.　　☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
14 September 2021

Date of mailing of the international search report
21 September 2021

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

INTERNATIONAL SEARCH REPORT
Information on patent family members

International application No.

PCT/JP2021/027422

| JP 2020-501884 A | 23 January 2020 | US 2020/0078729 A1<br>paragraphs [0026]-[0035],<br>[0063]-[0065], fig. 2, 7<br>CN 110392603 A<br>EP 3554674 A1<br>WO 2018/109476 A1 |
| JP 3-267109 A | 28 November 1991 | (Family: none) |
| JP 3-101807 A | 26 April 1991 | US 4950315 A<br>EP 412663 A2 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018511472 A

- JP 2013128868 A

**Non-patent literature cited in the description**

- **E. KAMIO et al.** *Adv.Mater,* 2017, vol. 29, 1704118